(19) **Europäisches Patentamt**
**European Patent Office**
**Office européen des brevets**

(11) **EP 2 579 677 A1**

(12) **EUROPEAN PATENT APPLICATION**
published in accordance with Art. 153(4) EPC

(43) Date of publication:
**10.04.2013 Bulletin 2013/15**

(21) Application number: **11785988.4**

(22) Date of filing: **28.02.2011**

(51) Int Cl.:
***H04W 88/00*** *(2009.01)*

(86) International application number:
**PCT/CN2011/071362**

(87) International publication number:
**WO 2011/147216 (01.12.2011 Gazette 2011/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.05.2010 CN 201010182028**

(71) Applicant: **Huawei Technologies Co., Ltd.
Shenzhen, Guangdong 518129 (CN)**

(72) Inventors:
• **JIANG, Wei
  Shenzhen
  Guangdong 518129 (CN)**
• **YANG, Xuezhi
  Shenzhen
  Guangdong 518129 (CN)**

(74) Representative: **Epping - Hermann - Fischer
Patentanwaltsgesellschaft mbH
Ridlerstraße 55
80339 München (DE)**

(54) **METHOD AND EQUIPMENT FOR SENDING BROADCAST SIGNALS**

(57) The present invention provides a method and an apparatus for transmitting a broadcast signal. The method includes: performing dividing processing on an antenna array in a multi-antenna system to obtain multiple sub-arrays; obtaining a basic weight vector of each sub-array among the multiple sub-arrays, where the basic weight vector makes a beam peak-to-average power ratio of each sub-array lower than a preset threshold and makes beam patterns of different sub-arrays complementary to each other in a direction dimension; performing, according to a weight coefficient in each basic weight vector, weighted processing on a transmit signal of an array element in a sub-array corresponding to the each basic weight vector to obtain a first signal, and use the array element to transmit the first signal. The present invention implements full coverage of the broadcast signal from the multi-antenna system in all directions in a cell or a sector.

Perform dividing processing on an antenna array in a multi-antenna system to obtain multiple subarrays — 101

Obtain a basic weight vector of each subarray among the multiple subarrays, where a weight vector makes a beam peak-to-average power ratio of each subarray lower than a preset threshold and makes beam patterns of different subarrays complementary to each other in a direction dimension — 102

Perform, according to a weight coefficient in each basic weight vector, weighted processing on a transmit signal of an array element in a subarray corresponding to the each basic weight vector to obtain a first signal, and use the array element to transmit the first signal. — 103

FIG. 1

EP 2 579 677 A1

## Description

This application claims priority to Chinese Patent Application No. 201010182028.3, filed with the Chinese Patent Office on May 24, 2010 and entitled "METHOD AND APPARATUS FOR TRANSMITTING BROADCAST SIGNAL", which is incorporated herein by reference in its entirety.

## FIELD OF THE INVENTION

The present invention relates to the field of communications technologies, and in particular, to a method and an apparatus for transmitting a broadcast signal.

## BACKGROUND OF THE INVENTION

With popularity of mobile broadband and smart phones, a traditional cellular mobile communication network dominated by voice services is difficult to bear burst data traffic of the mobile Internet due to limited frequency and power resources of wireless transmission technologies and effects of channel fading and interference. Thereby, a multi-antenna technology that can effectively increase spectrum efficiency becomes a mainstream technology of next-generation mobile communication.

A cell mode (that is, cellular mode) is a basic implementation manner of a current mobile communication network. A base station is the core of a cell and is crucial to implement mobile communication. Signal transmission of the base station may be classified into two types: dedicated channel and common channel. A dedicated channel bears information required by a single mobile terminal, and the communication is point-to-point communication between a base station and a terminal; a common channel bears common information required by all mobile terminals in a cell, for example, broadcast channel (Broadcast Channel, BCH for short) and paging channel (Paging Channel, PCH for short) of a long term evolution (Long Term Evolution, LTE for short) system, and multicast channel (Multicast Channel, MCH for short) used for a multimedia broadcasting and multicasting service (Multimedia Broadcasting and Multicasting Service, MBMS for short). The common information needs to be transmitted to all users of a single cell or multiple cells simultaneously, and is preferably transmitted in a form of a broadcast signal. Therefore, a method for transmitting a broadcast signal of a multi-antenna system is in need.

According to different antenna intervals and reflection environments, wireless transmission channels of the multi-antenna system are classified into correlated fading channel and independent fading channel. If an interval between antennas is small, there are a small number of reflection objects around, or the angle extension is small, correlation of channel fading between antennas is strong; if an interval between antennas is large, the reflection is sufficient, or the angle extension is large, channel fading between antennas is independent. In a macro-cell (that is, macro-cell), the multi-antenna system of a base station is generally installed on the top of a high building or a mountain, no reflection object around exists, and independent fading occurs only when the interval between antennas is larger than ten wavelengths. Many of multi-antenna systems of conventional base stations have correlated fading channels, for example, a smart antenna system or a multi-input multi-output (Multiple Input Multiple Output, MIMO for short) system in which a mobile terminal is in a poor-reflection environment (such as plain, water, or prairie).

Transmitting a signal by a single antenna has a natural feature of omni-directional coverage. Therefore, in the conventional multi-antenna system, an antenna of the multi-antenna system may be selected and equipped with a high-power amplifier, so as to achieve full coverage of the broadcast signal in a cell or a sector.

In the process of implementing the present invention, the inventor finds that the current technology has at least the following problems: The power amplifier features high cost and high power consumption, and thereby cannot effectively implement full coverage in a cell or a sector.

## SUMMARY OF THE INVENTION

The embodiments of the present invention provide a method and an apparatus for transmitting a broadcast signal, which implements full coverage of the broadcast signal from a multi-antenna system in a cell or a sector, and effectively reduces economic cost.

An embodiment of the present invention provides a method for transmitting a broadcast signal, including:

performing dividing processing on an antenna array in a multi-antenna system to obtain multiple sub-arrays;
obtaining a basic weight vector of each sub-array among the multiple sub-arrays, where the basic weight vector makes a beam peak-to-average power ratio of each sub-array lower than a preset threshold and makes beam patterns of different sub-arrays complementary to each other in a direction dimension; and
performing, according to a weight coefficient in each basic weight vector, weighted processing on a transmit signal of an array element in a sub-array corresponding to each basic weight vector to obtain a first signal, and using the array element to transmit the first signal.

An embodiment of the present invention provides an apparatus for transmitting a broadcast signal, including:

a dividing processing module, configured to perform dividing processing on an antenna array in a multi-antenna system to obtain multiple sub-arrays;
a basic weight vector obtaining module, configured to obtain a basic weight vector of each sub-array among the multiple sub-arrays, where the basic weight vector makes a beam peak-to-average power ratio of each sub-array lower than a preset threshold and makes beam patterns of different sub-arrays complementary to each other in a direction dimension; and
a first weighted-processing and transmitting module, configured to perform, according to a weight coefficient in each basic weight vector, weighted processing on a transmit signal of an array element in a sub-array corresponding to each basic weight vector to obtain a first signal, and use the array element to transmit the first signal.

According to the method and the apparatus for transmitting a broadcast signal provided in the embodiments of the present invention, dividing processing is performed on the antenna array in the multi-antenna system to obtain multiple sub-arrays, and then the basic weight vector of each sub-array among the multiple sub-arrays is obtained, where the basic weight vector makes the beam peak-to-average power ratio of each sub-array lower than the preset threshold and makes beam patterns of different sub-arrays complementary to each other in the direction dimension. According to a weight coefficient in each basic weight vector, weighted processing is performed on the transmit signal of the array element in the sub-array corresponding to each basic weight vector to obtain a first signal, and the array element is used to transmit the first signal. Thereby, the beam pattern of each sub-array is made to be complementary to each other in the direction dimension, and an average pattern of the multiple sub-arrays has a basically equal average power gain in every direction. It is ensured that all mobile terminals in a cell or a sector receive signals of same quality simultaneously, full coverage of a broadcast signal from the multi-antenna system in every direction in a cell or a sector is achieved, and economic cost is effectively reduced.

**BRIEF DESCRIPTION OF THE DRAWINGS**

To illustrate the technical solutions in embodiments of the present invention more clearly, drawings to be used in the description of the embodiments are briefly introduced in the following. Apparently the drawings described in the following are some embodiments of the present invention, and those skilled in the art can obtain other drawings according to these drawings without making creative efforts.
To illustrate the technical solutions in the embodiments of the present invention or in the prior art more clearly, drawings to be used in the description of the embodiments or the prior art are briefly introduced in the following. Apparently the drawings described in the following are some embodiments of the present invention, and those skilled in the art can obtain other drawings according to these drawings without making creative efforts.
FIG. 1 is a flow chart of an embodiment of a method for transmitting a broadcast signal according to the present invention;
FIG. 2 is a flow chart of another embodiment of a method for transmitting a broadcast signal according to the present invention;
FIG. 3 is an elementary diagram of signal transmission in the embodiment of the method for transmitting the broadcast signal according to the present invention shown in FIG. 2;
FIG. 4 is a schematic structural diagram of 8-antenna uniform linear array division;
FIG. 5 is a schematic structural diagram of division of two 4-antenna uniform linear arrays;
FIG. 6 is a schematic structural diagram of 8-array element dual-polarized antenna division;
FIG. 7 is an elementary diagram of signal transmission in the embodiment of the method for transmitting the broadcast signal according to the present invention shown in FIG. 2;
FIG. 8 is a flow chart of yet another embodiment of a method for transmitting a broadcast signal according to the present invention;
FIG. 9 is an elementary diagram of signal transmission based on Alamouti coding and phase rotation in the embodiment of the method for transmitting the broadcast signal according to the present invention shown in FIG. 8;
FIG. 10 is an elementary diagram of signal transmission based on Alamouti coding and cyclic delaying in the embodiment of the method for transmitting the broadcast signal according to the present invention shown in FIG. 8;
FIG. 11 is a schematic diagram of a space-time mapping relationship adopted in the embodiment of the method for transmitting the broadcast signal according to the present invention shown in FIG. 8;
FIG. 12 is a schematic diagram of a space-frequency mapping relationship adopted in the embodiment of the method for transmitting the broadcast signal according to the present invention shown in FIG. 8;

FIG. 13 shows two complementary beam patterns and an average beam pattern in the embodiment of the method for transmitting the broadcast signal according to the present invention shown in FIG. 8;

FIG. 14 shows two updated complementary beam patterns and an updated average beam pattern in the embodiment of the method for transmitting the broadcast signal according to the present invention shown in FIG. 8;

FIG. 15 is a flow chart of yet another embodiment of a method for transmitting a broadcast signal according to the present invention;

FIG. 16 is an elementary diagram of signal transmission based on time-switched or frequency-switched transmit diversity in an embodiment of a method for transmitting a broadcast signal according to the present invention;

FIG. 17 shows complementary beam patterns and an average beam pattern in the embodiment of the method for transmitting the broadcast signal according to the present invention shown in FIG. 15;

FIG. 18 is a schematic structural diagram of an embodiment of an apparatus for transmitting a broadcast signal according to the present invention;

FIG. 19 is a schematic structural diagram of another embodiment of an apparatus for transmitting a broadcast signal according to the present invention;

FIG. 20 is a schematic structural diagram of yet another embodiment of an apparatus for transmitting a broadcast signal according to the present invention; and

FIG. 21 is a schematic structural diagram of yet another embodiment of an apparatus for transmitting a broadcast signal according to the present invention.

## DETAILED DESCRIPTION OF THE EMBODIMENTS

To make the objectives, technical solutions, and advantages of the present invention clearer, the following describes the technical solutions in the embodiments of the present invention in conjunction with the accompanying drawings in the embodiments of the present invention. It is apparent that the embodiments to be described are only part rather that all of the embodiments of the present invention. All the other embodiments, which are obtained by those skilled in the art based on the embodiments of the present invention without making creative efforts, fall within the protection scope of the present invention.

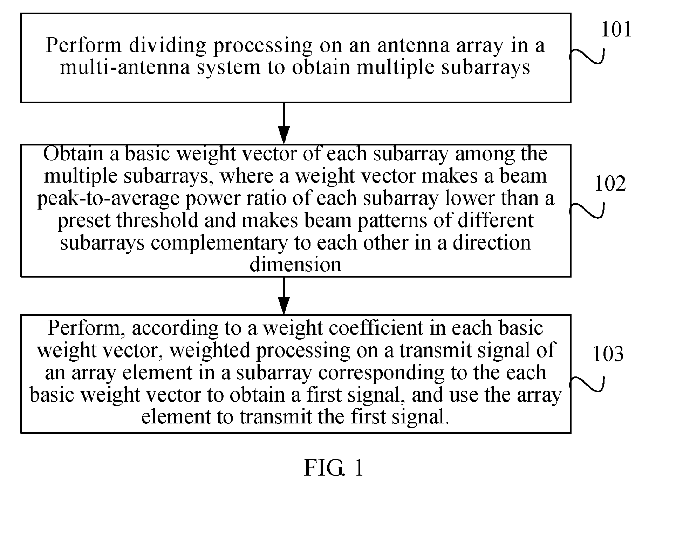

FIG. 1 is a flow chart of an embodiment of a method for transmitting a broadcast signal according to the present invention. As shown in FIG. 1, the method in the embodiment may include:

Step 101: Perform dividing processing on an antenna array in a multi-antenna system to obtain multiple sub-arrays.

In the embodiment, the multi-antenna system may be a single antenna array, multiple antenna arrays, or a polarized antenna array. For performing dividing processing on the antenna array in the multi-antenna system to obtain multiple sub-arrays, the following implementation manners may be adopted but do not serve as a limitation:

For the single antenna array, after dividing processing is performed on the single antenna array, multiple sub-arrays with small intervals may be obtained. Each sub-array may include at least one array element.

For the multiple antenna arrays, after dividing processing is performed on the multiple antenna arrays, multiple sub-arrays with large intervals may be obtained; in addition, sub-arrays of different polarization manners may also be obtained, where the polarization manner of each sub-array is the same. In the embodiment, the specific manner adopted for performing dividing processing on the antenna array in the multi-antenna system is not limited, and those skilled in the art can adopt any dividing processing manner according to requirements. At the same time, the antenna array may be a linear array, a circle array, a square array, and an antenna array of any other shape; an interval between antenna array elements is generally half a wavelength and meanwhile, may also be other array element interval that keeps channel correlation, for example, two wavelengths or even ten wavelengths.

Step 102: Obtain a basic weight vector of each sub-array among the multiple sub-arrays, where the basic weight vector makes a beam peak-to-average power ratio of each sub-array lower than a preset threshold and makes beam patterns of different sub-arrays complementary to each other in a direction dimension.

Step 103: Perform, according to a weight coefficient in each basic weight vector, weighted processing on a transmit signal of an array element in a sub-array corresponding to each basic weight vector to obtain a first signal, and use the array element to transmit the first signal.

In the embodiment, each basic weight vector may include multiple weight coefficients, each sub-array may include multiple array elements, and the number of weight coefficients in the basic weight vector corresponding to each sub-array is equal to the number of array elements in the sub-array. According to the weight coefficient of the basic weight vector corresponding to each sub-array, weighted processing is performed separately on a transmit signal of an array element in the sub-array to obtain a first signal, that is, weighted processing is performed on the transmit signal of the array element in each sub-array to obtain a first signal, and the array element is used to transmit the first signal. Thereby, the beam pattern of each sub-array is made to have wide coverage angle and low peak-to-average power

**EP 2 579 677 A1**

ratio, and meanwhile, beam patterns of different sub-arrays are complementary to each other in the direction dimension.

For example, when weighted processing is performed, according to a weight coefficient in a basic weight vector corresponding to one sub-array among the multiple sub-arrays, on a transmit signal of an array element in the sub-array, and the array element in the sub-array is used to transmit the signal after weighted processing, a beam pattern of the sub-array may have a low gain or no gain in some particular directions. In this case, weighted processing is performed, according to a weight coefficient in a basic weight vector corresponding to another sub-array among the multiple sub-arrays, on a transmit signal of an array element in the another sub-array, and the array element in the sub-array is used to transmit the signal after weighted processing, making a beam pattern of the sub-array have high gains in these particular directions. Thereby, an average beam pattern for beam patterns of the multiple sub-arrays is made to have small gain fluctuation in the particular directions.

In the embodiment, when a beam pattern of a sub-array has a very low gain in a particular direction, a signal that is transmitted by the sub-array and received by a mobile terminal at the moment in the particular direction may be relatively weak. However, when a beam pattern of another sub-array has a relatively high gain in the particular direction, a signal that is transmitted by the another sub-array and received by the mobile terminal at the moment in the particular direction is made to be relatively strong. Technologies such as channel coding or diversity may be used to complement performance loss caused by transmit signal weakness of one sub-array among the multiple sub-arrays, and further ensure that the mobile terminal in the particular direction can normally receive a broadcast signal.

In the embodiment, dividing processing is performed on the antenna array in the multi-antenna system to obtain multiple sub-arrays, and then the basic weight vector of each sub-array among the multiple sub-arrays is obtained, where the basic weight vector makes the beam peak-to-average power ratio of each sub-array lower than the preset threshold and makes beam patterns of different sub-arrays complementary to each other in the direction dimension. According to a weight coefficient in each basic weight vector, weighted processing is performed on the transmit signal of the array element in the sub-array corresponding to each basic weight vector to obtain the first signal, and the array element is used to transmit the first signal. The beam pattern of each sub-array has wide coverage angle and low peak-to-average power ratio, and the average beam pattern for beam patterns of all sub-arrays has gain differences equal to zero or smaller than a preset value in all directions of a full cell or a sector, which thereby makes the transmit power of the multi-antenna system is basically equal in all directions, implements full coverage of the broadcast signal from the multi-antenna system in all directions in a cell or a sector, and effectively reduces economic cost.

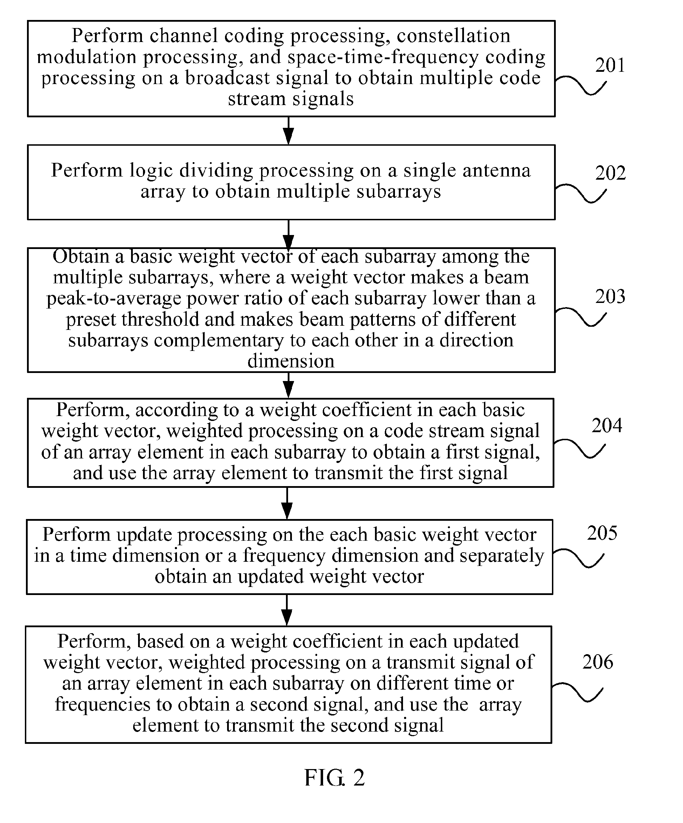

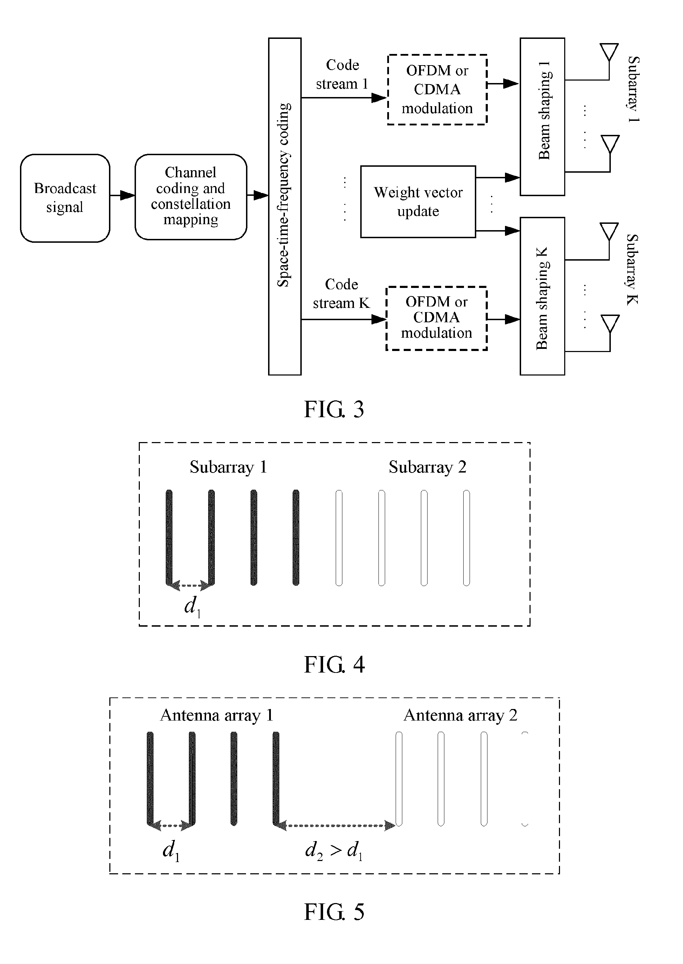

FIG. 2 is a flow chart of another embodiment of a method for transmitting a broadcast signal according to the present invention, and FIG. 3 is an elementary diagram of signal transmission in the embodiment of the method for transmitting the broadcast signal according to the present invention shown in FIG. 2. As shown in FIGs. 2 and 3, the method in this embodiment may include:

Step 201: Perform channel coding processing, constellation modulation processing, and space-time-frequency coding processing on the broadcast signal to obtain multiple code stream signals.

In the embodiment, channel coding processing and constellation modulation processing may be performed on a broadcast signal to obtain multiple symbol streams. Therefore, a transmit signal of an array element in each sub-array may be a code stream signal or a symbol stream.

For example, the broadcast signal is specifically a bit stream of a multimedia broadcasting and multicasting service (Multimedia Broadcasting and Multicasting Service, MBMS for short) and a bit stream of a cell common channel signal. In the embodiment, a specific implementation manner of performing space-time-frequency coding processing on a broadcast signal to obtain multiple code stream signals is: Firstly separately perform channel coding process, interleaving processing, and constellation mapping processing on the bit stream of the multimedia broadcasting and multicasting service and the bit stream of cell common channel signals to obtain a (multiplexing) symbol stream. Then, perform space-time-frequency coding processing on the obtained (multiplexing) symbol stream to obtain multiple code stream signals. The number of the code streams is equal to the number of sub-arrays and the code streams are in one-to-one relationship with the sub-arrays.

Alternatively, channel coding processing, interleaving processing, and constellation mapping processing may be separately performed on the bit stream of the multimedia broadcasting multicasting service and the bit stream of the cell common control signal to obtain a single-path (multiplexing) symbol stream, and the symbol stream is sent to each sub-array among the multiple sub-arrays, that is, the transmit signal of each sub-array is the same.

In the embodiment, performing space-time-frequency coding processing on a broadcast signal to obtain multiple code stream signals is taken for example to describe the technical solution in the embodiment. The space-time-frequency coding method may be but is not limited to Alamouti coding, space-time block coding (Space-Time Block Coding, STBC for short), space-frequency block coding (Space-Frequency Block Coding, SFBC for short), time switched transmit diversity (Time Switched Transmit Diversity, TSTD for short), and frequency switched transmit diversity (Frequency Switched Transmit Diversity, FSTD for short). The embodiment does not limit the specific space-time-frequency coding method. Those skilled in the art may use any or a combination of the preceding space-time-frequency methods or another possible space-time-frequency coding method according to requirements.

Step 202: Perform logic dividing processing on a single antenna array to obtain multiple sub-arrays.

In the embodiment, a case that the multi-antenna system is a single antenna array is taken for example to describe in detail the technical solution of the present invention: Perform logic dividing processing on the single antenna array to obtain multiple sub-arrays and each sub-array includes at least one array element. Each array element can be selected by all sub-arrays only once; in other words, any two different sub-arrays do not include a same array element. Meanwhile, each array element of the single antenna array before dividing processing is selected once; that is, the sum of array elements in all sub-arrays is equal to all array elements in the single antenna array before dividing processing.

For example, FIG. 4 is a schematic structural diagram of 8-antenna uniform linear array division. As shown in FIG. 4, two sub-arrays obtained by performing logic dividing processing on the single antenna array are sub-array 1 and sub-array 2, and each sub-array includes four array elements. This embodiment does not limit the array element spatial arrangement manner, the number of array elements, and a spacing distance between array elements, and those skilled in the art can set them according to requirements.

In step 202 in this embodiment, according to different types of antenna arrays, other implementation manners may be adopted:

1. When the multi-antenna system is multiple antenna arrays, an implementation manner of step 202 may be: performing dividing processing on the multiple antenna arrays according to a spacing distance to obtain multiple sub-arrays.

For example, the multi-antenna system includes multiple antenna arrays with a large spacing distance. FIG. 5 is a schematic structural diagram of division of two 4-antenna uniform linear arrays. As shown in FIG. 4, the obtained two sub-arrays are respectively sub-array 1 and sub-array 2, and each sub-array includes four array elements. The interval between the array elements is represented by $d_1$, which is generally half a wavelength, a distance $d_2$ between sub-arrays is greater than $d_1$. Two 4-antenna uniform linear arrays may be two antenna arrays that are far in physical positions on a same base station or may also be antennas installed on two different base stations. This embodiment does not limit the array element spatial arrangement manner, the number of array elements, and an interval between array elements, and those skilled in the art can set them according to requirements.

2. When the multi-antenna system is a polarized antenna array, an implementation manner of step 202 may be: Perform dividing processing on the polarized antenna array according to a polarization direction to obtain multiple sub-arrays.

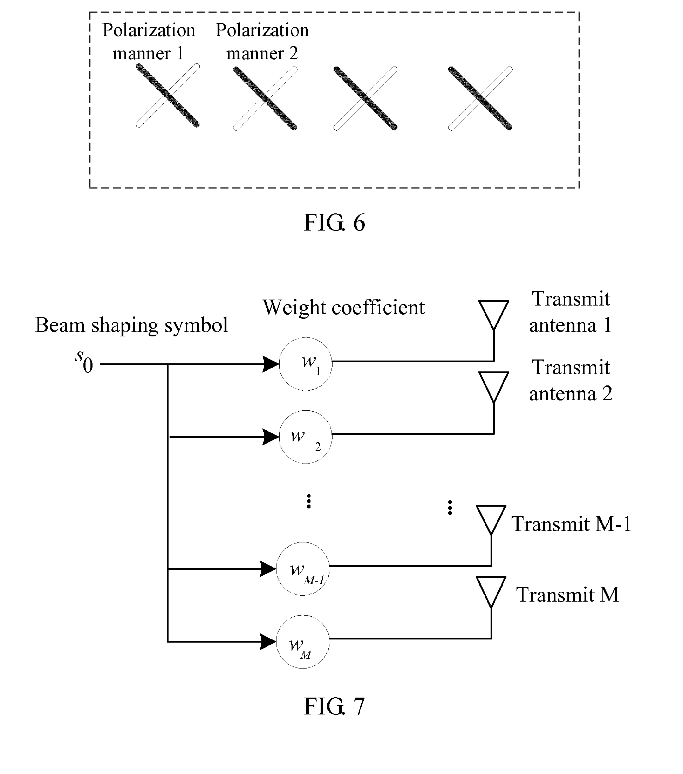

For example, when the multi-antenna system is a polarized antenna array, FIG. 6 is a schematic structural diagram of 8-array element dual-polarized antenna division. As shown in FIG. 6, two sub-arrays are obtained, and each sub-array includes four array elements. The four array elements in one sub-array are in a horizontal polarization manner, and the four array elements in the other sub-array are in a vertical polarization manner. This embodiment does not limit the array element spatial arrangement manner, the number of array elements, and a spacing distance between array elements, and those skilled in the art can set them according to requirements. It should be noted that all array elements in one sub-array are in a same polarization manner to have correlated channel fading.

The antenna array to which the present invention is applicable may be a linear array, a circle array, a square array, and an antenna array in any other shape; an interval between antenna array elements is generally half a wavelength and may be other array element interval that can keep channel correlation, for example, two wavelengths or even ten wavelengths.

Step 203: Obtain a basic weight vector of each sub-array among the multiple sub-arrays, where the basic weight vector makes a beam peak-to-average power ratio of each sub-array lower than a preset threshold and makes beam patterns of different sub-arrays complementary to each other in a direction dimension.

In the embodiment, when an apparatus for transmitting a broadcast signal obtains a basic weight vector corresponding to each sub-array, a manner of traversal selection by a computer may be adopted. Moreover, weight coefficients in basic weight vectors obtained in the embodiment have same modulus values, and therefore, weight coefficients with the same modulus values enable all array elements of the antenna arrays to perform transmission at the same power, thereby increasing efficiency of a power amplifier.

The method of obtaining the basic weight vector in the embodiment is flexible and simple. For example, a general implementation manner of obtaining the basic weight vector is: Assuming on a unit circle of a complex number coordinate, N complex numbers with the modulus value being 1 are selected as available weight coefficients, and the number of array elements in the antenna arrays is M, there are $N^M$ combinations of M-dimension weight vectors that are possibly obtained. Assuming that N = 8 and M =8, the number of weight vectors that need to be traversed is $8^8$ = 16777216 in total. Specifically, to further provide selection precision, 16 or 32 complex numbers in a unit circle may be selected as available weight coefficients, or the number of antenna array elements may be increased, for example, 12 or 16 array elements. Beam pattern and peak-to-average power ratio of each traversed weight vector need to be computed separately, and the computation is relatively complicated.

By comparison, in this embodiment, as step 202 is adopted to perform dividing processing on the antenna arrays to obtain multiple sub-arrays, the number of array elements in each sub-array is small. For example, the antenna array is an 8-antenna array; after dividing processing is performed on the array by four array elements, the number of array elements in each sub-array is 4, and then, the number of weight vectors that need to be traversed is $8^4 = 4096$. If dividing processing is performed on the array by two array elements, the number of array elements in each sub-array is 2, and then, the number of weight vectors that need to be traversed is $8^2 = 64$. Therefore, the method of obtaining a basic weight vector in this embodiment is simpler and more flexible.

Step 204: Perform, according to a weight coefficient in each basic weight vector, weighted processing separately on a code stream signal of an array element in each sub-array to obtain a first signal, and use the array element to transmit the first signal.

In this embodiment, the number of array elements included in each sub-array may be the same or may not be the same. It should be noted that each basic weight vector includes multiple weight coefficients, and the number of weight coefficients included in each weight vector is the same as the number of array elements included in the sub-array corresponding to each basic weight vector. FIG. 7 is an elementary diagram of signal transmission in the embodiment of the method for transmitting the broadcast signal according to the present invention shown in FIG. 2. As shown in FIG. 7, taking the number of array elements of sub-array $k$ being $M$ for example, an apparatus for transmitting a broadcast signal can obtain a basic weight vector corresponding to the sub-array, and the basic weighted vector may enable the sub-array to perform weighted processing on a received code stream signal according to the corresponding basic weight vector. It should be noted that a beam peak-to-average power ratio corresponding to the basic weight vector is lower than a preset threshold, and beam patterns of different sub-arrays are complementary to each other in a direction dimension, which further makes an average beam pattern of all sub-arrays close to an omni-directional beam of a single antenna.

Step 205: Perform update processing on each basic weight vector in a time dimension or a frequency dimension and separately obtain an updated weight vector.

Specifically, specific implementation manners of step 205 may include but not limited to the following manners:

1. Phase rotation method: Obtain a phase value $\Delta\phi$ randomly from $[0\ 2\pi]$, the basic weight vector corresponding to each sub-array is expressed as $w = [w_1\ w_2 \cdots w_M]^T$, $w_m$ $(m = 1,\cdots,M)$ indicates a weight coefficient, and $M$ is a positive integer larger than 1.

Applied formula:

$$\mathbf{w}_{New} = diag[1 \quad e^{j\Delta\phi} \quad e^{j2\Delta\phi} \cdots e^{j(M-1)\Delta\phi}]\mathbf{w}$$
$$= \begin{bmatrix} w_1 & w_2 e^{j\Delta\phi} & w_3 e^{j2\Delta\phi} & \cdots & w_M e^{j(M-1)\Delta\phi} \end{bmatrix}^T \tag{1}$$

Perform update processing on the basic weight vector corresponding to each sub-array and obtain an updated weight vector corresponding to each sub-array. $w_{New}$ indicates an updated weight vector, j is an imaginary number unit $j^2 = -1$, and $diag[x_1...x_n]$ indicates a diagonal array formed by $x_1$ to $x_n$.

2. Random variable method

Specifically, when sub-arrays obtained by performing dividing processing on the antenna arrays in the multi-antenna system include two array elements, the basic weight vector is used to perform weighted processing on the sub-array. There are two features: In a set of complex numbers with equal moduli, two complex numbers are randomly selected as weight coefficients. (1) No matter how the weight coefficients are selected, a peak-to-average power ratio (or peak value) of their beam patterns remain unchanged; (2) When one of the weight coefficients is not changed and the other weight coefficient is a negative value, a corresponding beam pattern is complementary to a beam pattern when neither of the two coefficients are negative values.

Based on the preceding two features, the basic weight vector may be obtained and updated randomly. For example, a selection manner of a basic weight vector is: randomly selecting two weight coefficients to form a first basic weight vector corresponding to a sub-array, where moduli of the two weight coefficients are both equal to 1, and then $|w_1| = |w_2| = 1$; obtaining a negative value for a weight coefficient in the first basic weight vector, for example, obtaining the additive value for a second weight coefficient in the first basic weight vector, to obtain a second basic weight vector corresponding to another sub-array. Specifically, $w_1 = [w_1\ w_2]^T$, $w_2 = [w_1 - w_2]^T$. When an updated weight coefficient needs to be obtained, two weight coefficients are randomly selected again, and two updated weight vectors may be obtained according to the preceding method, and updated beam patterns corresponding to each sub-array are complementary to each other.

Step 206: Perform, according to a weight coefficient in each updated weight vector, weighted processing on the transmit signal of the array element in each sub-array at different time or on a different frequency to obtain a second signal, and use the array element to transmit the second signal.

In the embodiment, each sub-array has a fixed basic beam pattern, and multiple beam patterns of different sub-arrays are complementary to each other. However, the number of beam patterns is small, and therefore, transmit power of the multi-antenna system in all directions may be different. Therefore, update processing may be performed on the basic weight vector corresponding to each sub-array in the time dimension or the frequency dimension, so that an average beam pattern of all sub-arrays is better isotropic, and then full coverage in a cell or sector is implemented, and economic cost is effectively reduced.

In the embodiment, to effectively implement full coverage in cells or sectors, the following implementation manners may be included but do not serve as a limitation:

1. Delaying method: On each array element, perform weighted processing on a transmit signal according to a weight coefficient to obtain a first signal, perform delaying processing on the first signal to obtain a second signal, where delays of all array elements are different, and the largest delay is less than a preset value. For example, when linear incremental delaying is adopted, no delay is applied on a first array element, a delay of $\Delta\tau$ is applied on a second array element, and a delay of $2\Delta\tau$ is applied on a third array element, and the delay is increased in order until the last array element, where a delay of $(N\text{-}1)\Delta\tau$ is applied on an Nth array element. Each array element is used to transmit the second signal.

2. Cyclic delaying method: Specifically, in a broadband wireless communication system, orthogonal frequency division multiplexing (Orthogonal Frequency Division Multiplexing, OFDM for short) modulation may be adopted. According to the property of the Discrete Fourier transform (Digital Fourier Transform, DFT for short), when the cycle of a time domain is delayed, the phase of a corresponding frequency-domain symbol rotates. Specifically, OFDM modulation is performed on the transmit signal of each sub-array to generate an OFDM symbol, and the OFDM symbol is weighted by using a first coefficient in a basic weight vector corresponding to the sub-array, and is transmitted by a first array element of the sub-array; the OFDM symbol is weighted by using a second weight coefficient, undergoes cyclic delaying, and is transmitted by a second array element of the sub-array. As deduced by analog, at last, the OFDM symbol is weighted by using the last weight coefficient of the basic weight vector, undergoes cyclic delaying, and is transmitted by the last array element. It should be noted that cyclic delays of different array elements in the same sub-array are different.

In the embodiment, dividing processing is performed on the antenna array in the multi-antenna system to obtain multiple sub-arrays, and the basic weight vector is selected for each sub-array; according to each basic weight vector, weighted processing is performed on the code stream signal of the array element in each sub-array, which makes a beam pattern of each sub-array have wide coverage angle and low peak-to-average power ratio, beam patterns of different sub-arrays complementary to each other in the direction dimension, and the average beam pattern for all beam patterns of all sub-arrays have differences equal to zero or lower than a preset value in all directions. Meanwhile, by performing update processing on the basic weight vector in the time dimension or the frequency dimension, a gain of the time diversity or frequency diversity is obtained, which further enhances the full coverage performance of the cell or the sector and effectively reduces the economic cost.

The following uses several specific embodiments to describe in detail the technical solutions of a method for transmitting a broadcast signal provided in the present invention.

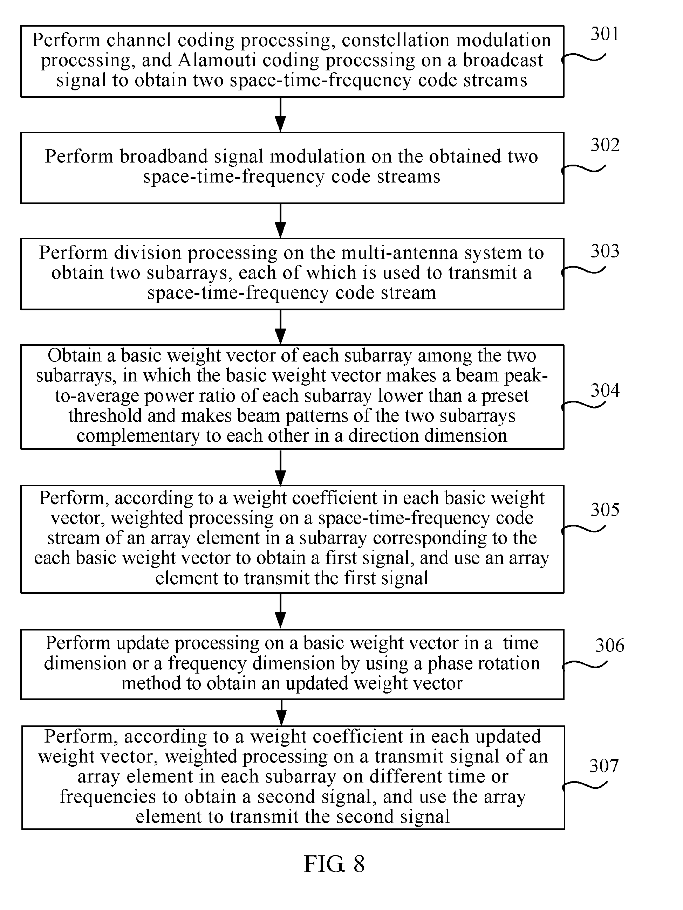

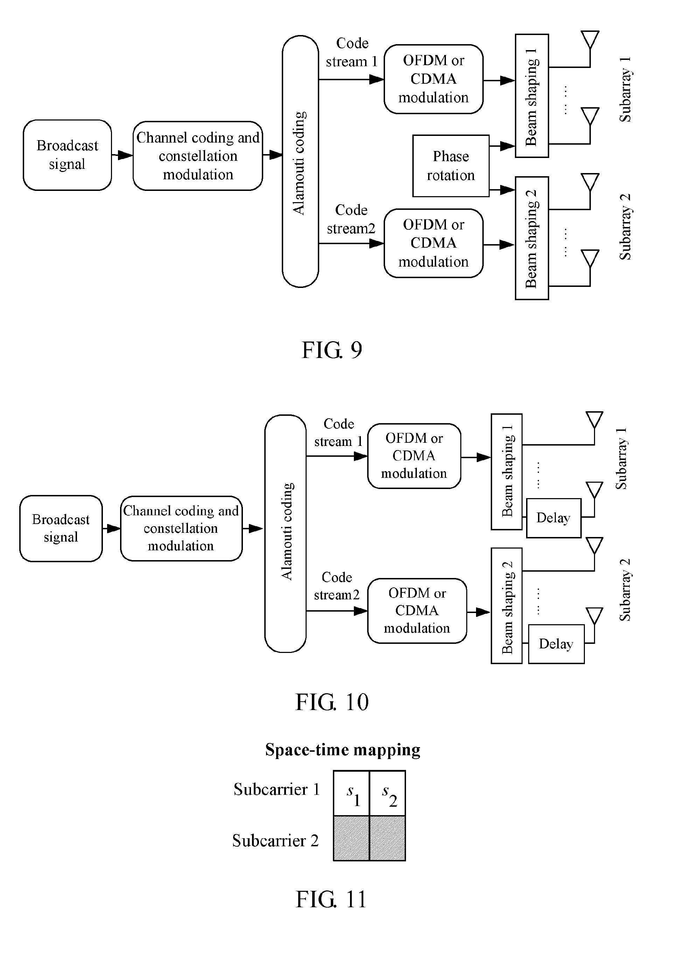

FIG. 8 is a flow chart of yet another embodiment of a method for transmitting a broadcast signal according to the present invention; FIG. 9 is an elementary diagram of signal transmission based on Alamouti coding and phase rotation in the embodiment of the method for transmitting the broadcast signal according to the present invention shown in FIG. 8; FIG. 10 is an elementary diagram of signal transmission based on Alamouti coding and cyclic delaying in the embodiment of the method for transmitting the broadcast signal according to the present invention shown in FIG. 8. As shown in FIGs. 8, 9, and 10, the method provided in the embodiment may include:

Step 301: Perform channel coding processing, constellation modulation processing, and Alamouti coding processing on a broadcast signal to obtain two space-time-frequency code streams.

For example, the broadcast signal is specifically a bit stream of a multimedia broadcasting and multicasting service and a bit stream of a cell common control signal. In the embodiment, after channel coding and constellation mapping are performed on the broadcast signal, a (multiplexing) symbol stream is obtained. Every two symbols of the (multiplexing) symbol stream are used as a group, and space-time-frequency coding is performed on a symbol stream which is a group of every two symbols, to generate two space-time-frequency code streams. Specifically, Alamouti coding has two equivalent forms, and a coding matrix is as shown in formula (2) and formula (3), where a row of the coding matrix corresponds to an antenna of the space domain or a sub-array in the present invention, and a column of the coding matrix corresponds to an OFDM symbol period of the time domain or a OFDM subcarrier of the frequency domain. It should be noted that the space-time-frequency coding stream is a code stream signal.

$$\begin{bmatrix} s_1 & s_2 \end{bmatrix} \xrightarrow{\;Alamouti\;} \begin{bmatrix} s_1 & s_2 \\ -s_2^* & s_1^* \end{bmatrix} \tag{2}$$

$$\begin{bmatrix} s_1 & s_2 \end{bmatrix} \xrightarrow{\;Alamouti\;} \begin{bmatrix} s_1 & -s_2^* \\ s_2 & s_1^* \end{bmatrix} \tag{3}$$

Step 302: Perform bandwidth signal modulation on the obtained two space-time-frequency code streams.

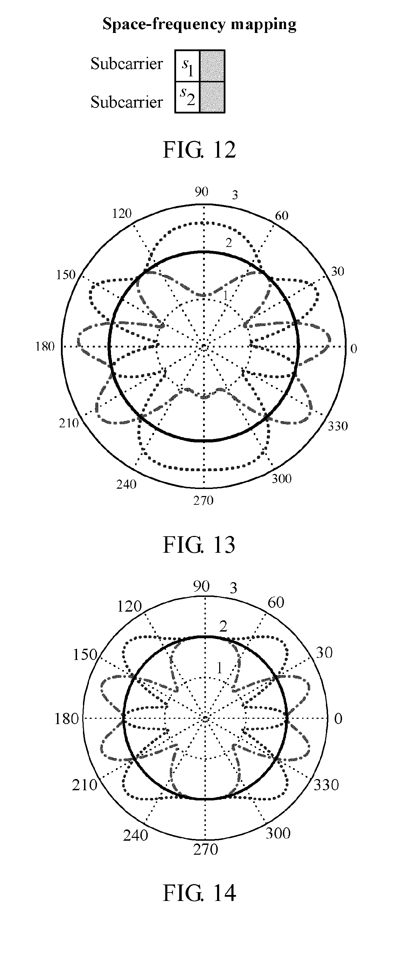

For example, for a narrowband communication system, symbols in space-time-frequency code streams may be transmitted directly in order without undergoing processing in this step; for a broadband communication system, code division multiple access (Code Division Multiple Access, CDMA for short) modulation or orthogonal frequency division multiplexing (OFDM) modulation needs to be performed. In this embodiment, OFDM modulation is used only as an example for illustration, and OFDM modulation in other embodiments of the present invention may be replaced with CDMA modulation. Firstly, subcarrier mapping is performed on the space-time-frequency code streams to allocate a proper time-frequency block to a symbol in each space-time-frequency code stream, and then perform OFDM modulation on the symbol of the space-time-frequency code stream after allocation, that is, performing inverse fast Fourier transform (IFFT) and inserting a cyclic prefix (CP). Subcarrier mapping may be performed in two methods: space-time mapping and space-frequency mapping. FIG. 11 is a schematic diagram of a space-time mapping relationship adopted in the embodiment of the method for transmitting the broadcast signal according to the present invention shown in FIG. 8, and FIG. 12 is a schematic diagram of a space-frequency mapping relationship adopted in the embodiment of the method for transmitting the broadcast signal according to the present invention shown in FIG. 8.

As shown in FIG. 11, when the subcarrier mapping is the space-time mapping, a first space-time code stream in the Alamouti coding matrix is placed on the same subcarrier of two consecutive OFDM symbols on a first sub-array, and a second space-time code stream in the Alamouti coding matrix is placed on the same subcarrier of two consecutive OFDM symbols on a second sub-array, and the position is the same as the position of the subcarrier on the first sub-array.

As shown in FIG. 12, when the subcarrier mapping is the space-frequency mapping, a first space-frequency code stream in the Alamouti coding matrix is placed on two consecutive subcarriers on the first sub-array, and a second space-frequency code stream in the Alamouti coding matrix is placed on two consecutive subcarriers on the second sub-array, where the position is the same as the position of the subcarriers on the first sub-array. In this embodiment, the space-time mapping is used as an example to describe in detail the technical solution of the present invention.

Step 303: Perform dividing processing on a multi-antenna system to obtain two sub-arrays, where each sub-array is used to transmit a space-time-frequency code stream.

In the embodiment, two space-time-frequency coding streams are obtained after Alamouti coding is adopted, and therefore, dividing processing is performed on the multi-antenna system to obtain two sub-arrays. Taking the 8-antenna dual-polarized antenna array shown in FIG. 6 as an example, the antenna array is divided into two sub-arrays each of which has 4 antennas with same polarization, and the two sub-arrays have different polarization manners. It can be deemed that channel fading is independent, array elements in the same sub-array have the same polarization manners and have a small interval, and channel correlation may be obtained. According to direction vectors of the two sub-arrays, basic weight vectors are selected separately, weighted processing is performed separately on the two space-time-frequency code streams, and then the code streams are transmitted.

To describe the present invention more specifically, an 8-antenna uniform linear array (Uniform Linear Array, ULA for short) with half a wavelength as an interval is shown in FIG. 4 and used as an example to introduce in detail the technical solution in the embodiment. The embodiment does not limit the specifically used antenna array, and those skilled in the art can use an antenna array in any antenna array shape, of any antenna quantity, and with another interval between array elements according to requirements. Specifically, dividing processing is performed on the antenna array with four adjacent array elements as a sub-array, and two sub-arrays, each of which has four adjacent array elements, are obtained. The transmitted space-time-frequency code streams are different, and therefore, an interference effect does not occur on signals transmitted by the two sub-arrays. A direction vector of the antenna array may be divided into two four-dimension independent direction vectors. With a first array element as a reference point, a direction vector of ULA is:

$$\mathbf{a}_8(\theta) = \begin{bmatrix} 1 & e^{-j\pi\sin(\theta)} & e^{-j2\pi\sin(\theta)} & e^{-j3\pi\sin(\theta)} & e^{-j4\pi\sin(\theta)} & e^{-j5\pi\sin(\theta)} & e^{-j6\pi\sin(\theta)} & e^{-j7\pi\sin(\theta)} \end{bmatrix}^T$$

When both sub-arrays use the first array element of ULA as a reference point, direction vectors of the two sub-arrays are:

$$\begin{cases} a_{41}(\theta) = \begin{bmatrix} 1 & e^{-j\pi\sin(\theta)} & e^{-j2\pi\sin(\theta)} & e^{-j3\pi\sin(\theta)} \end{bmatrix}^T \\ a_{42}(\theta) = \begin{bmatrix} e^{-j4\pi\sin(\theta)} & e^{-j5\pi\sin(\theta)} & e^{-j6\pi\sin(\theta)} & e^{-j7\pi\sin(\theta)} \end{bmatrix}^T \end{cases} \quad (4)$$

$\theta$ indicates a direction angle, and $(\cdot)^T$ indicates transposition of a vector.

Step 304: Obtain a basic weight vector of each sub-array among the two sub-arrays, where the basic weight vector makes a beam peak-to-average power ratio of each sub-array lower than a preset threshold and makes beam patterns of the two sub-arrays complementary to each other in the direction dimension.

In the embodiment, an apparatus for transmitting a broadcast signal may obtain basic weight vectors corresponding to the two respective sub-arrays, and the two basic weight vectors may make beam patterns of corresponding sub-arrays have wide coverage angle and low peak-to-average power ratio, and meanwhile, make the two beam patterns complementary to each other in the direction dimension. For example, two corresponding basic weight vectors that make beam patterns have wide coverage angle and low peak-to-average power ratio and make the beam patterns complementary to each other are obtained:

$$w_1 = \begin{bmatrix} 1 & 0.7071 - 0.7071j & j & -0.7071 - 0.7071j \end{bmatrix}^H \quad (5)$$

$$w_2 = \begin{bmatrix} 1 & -0.7071 + 0.7071j & j & 0.7071 + 0.7071j \end{bmatrix}^H \quad (6)$$

$w_1$ and $w_2$ indicate basic weight vectors, and $(\cdot)^H$ indicates conjugate transposition of a vector.

Step 305: Perform, according to a weight coefficient in each basic weight vector, weighted processing on a space-time-frequency code stream of an array element in a sub-array corresponding to each basic weight vector to obtain a first signal, and use the array element to transmit the first signal.

Weighted processing is performed on the two space-time-frequency code streams on the two sub-arrays by weight coefficients in two basic weight vectors, respectively, to obtain first signals, and array elements are used to transmit the first signals. A beam pattern of a sub-array may be obtained through formula (7):

$$g(\theta) = w^H a(\theta) \quad (7)$$

$g(\theta)$ indicates a beam pattern.

FIG. 13 shows two complementary beam patterns and an average beam pattern in the embodiment of the method for transmitting the broadcast signal according to the present invention shown in FIG. 8. As shown in FIG. 13, the beam patterns of the two sub-arrays are indicated by a dash dotted line and a dotted line, respectively. According to FIG. 13, the beams are well complementary to each other: a high gain area of beam 1, such as places at angles 30°, 90°, 150°, and 270°, complements a low gain area of beam 2; reversely, in low gain area of beam 1, such as places at 0°, 180°, 210°, and 330° in the drawing, beam 2 has just a high gain. Meanwhile, the average beam pattern of the two beam patterns is just a circle (shown as the continuous line in FIG. 13), and therefore, omni-directional coverage is implemented.

Step 306: Perform update processing on a basic weight vector in the time dimension or the frequency dimension by using a phase rotation method, to obtain an updated weight vector.

Step 307: Perform, according to a weight coefficient in each updated weight vector, weighted processing on the transmit signal of the array element in each sub-array at different time or on a different frequency to obtain a second signal, and use the array element to transmit the second signal.

As shown in FIG. 13, the average beam pattern of the two basic weight vectors can achieve omni-directional coverage in cells. However, when the number of array elements in the antenna array is large, computation is very complicated, and it is difficult to obtain two basic weight vectors that are fully complementary to each other; or because of a phase error of an antenna channel caused by factors such as a physical position error of the antenna or on a feeder phase error, for example in actual engineering, a great deviation may exist between a beam pattern obtained by performing weighted processing on the transmit signal of the sub-array by using the basic weight vector and a beam pattern that is obtain through theoretical computation. To achieve better coverage performance and improve robustness, the phase rotation method may be used to perform update processing on the basic weight vector in the time dimension or the frequency dimension so that the average beam pattern of sub-arrays is better isotropic. For example, the phase rotation method according to FIG. 2 is used to randomly obtain a phase value $\Delta\phi$. Assuming that $\Delta\phi = 45°$, two updated weight vectors is obtained according to formula (1):

$$w_3 = \begin{bmatrix} 1 & 1 & -1 & 1 \end{bmatrix}^H \tag{8}$$

$$w_4 = \begin{bmatrix} 1 & -1 & -1 & -1 \end{bmatrix}^H \tag{9}$$

$w_3$ and $w_4$ indicate update weighted vectors.

FIG. 14 shows two updated complementary beam patterns and an updated average beam pattern in the embodiment of the method for transmitting the broadcast signal according to the present invention shown in FIG. 8. As shown in FIG. 14, an updated beam pattern that is corresponding to each of the two sub-arrays and obtained by using the two updated weight vectors to perform weighted processing on space-time-frequency code streams of sub-arrays has a same peak-to-average power ratio and peak value as a beam pattern that is corresponding to each of the two sub-arrays and obtained by using the basic weight vectors to perform weighted processing on the space-time-frequency code streams of the sub-arrays. In addition, the two updated beam patterns are well complementary to each other.

In the embodiment, Alamouti coding is adopted to perform coding processing on the broadcast signal to be transmitted to obtain two space-time-frequency code streams, and thereby, dividing processing is correspondingly performed on the antenna array to obtain two sub-arrays; the basic weight vector is selected for each sub-array, and according to the two basic weight vectors, weighted processing is performed on the code stream signal of the array element in the sub-array; the obtained beam patterns are complementary to each other in the direction dimension and transmit power thereof is isotropic. Meanwhile, the phase rotation method is used to continuously perform update processing on the basic weight vector in the time dimension or the frequency dimension to further improve omni-directional coverage performance of a cell, which ensures that all mobile terminals in the cell receive signals of the same quality, and effectively reduces economic cost.

Further, in the method, the delaying method may also be used to obtain the second signal. For example, in broadband wireless communication, before undergoing weighted processing, the space-time-frequency code stream of the sub-array may be processed by using CDMA modulation, and an obtained CDMA spread-spectrum signal is weighted separately by using the corresponding weight coefficient in the basic weight vector on each array element of the sub-array, and is delayed and then transmitted. For example, when linear incremental delaying is adopted, no delay is applied on a first array element, a delay of one chip (Chip) is applied on a second array element, and a delay of two chips is applied on a third array element, and the delay is increased in order until the last array element, a delay of N-1 chips is performed on an Nth array element.

In a broadband communication system using OFDM modulation, besides the preceding delaying method, the method may also use the cyclic delaying method to obtain the second signal. In the embodiment, the antenna array is an 8-antenna uniform linear array, and dividing processing is performed on the antenna array with four adjacent array elements as a sub-array, to obtain two sub-arrays, each of which has four adjacent array elements. A first sub-array transmits one of the space-time-frequency code streams; before weighted processing, OFDM modulation is performed on the code stream to obtain an OFDM symbol. The OFDM signal is weighted by using a first weight coefficient in a basic weight vector corresponding to the first sub-array to obtain a second signal, delaying is not performed, and the second signal is transmitted by a first array element; the OFDM symbol is weighted by using a second weight coefficient and undergoes cyclic delaying processing, to obtain a second signal, and the second signal is transmitted by a second array element; the OFDM signal is weighted by using a third weight coefficient and undergoes cyclic delaying processing, to obtain a second signal, and the second signal is transmitted by a third array element; the OFDM signal is weighted by using a fourth coefficient and undergoes cyclic delaying processing to obtain a second signal, and the second signal is transmitted by a fourth array element. A second sub-array transmits the other of the two space-time-frequency code streams, and the cyclic delaying method is the same as that for the first sub-array. For example, according to the property of the discrete Fourier transform (DFT), when cyclic delaying is performed in the time domain, it is equivalent to multiplying a frequency-domain symbol corresponding to discrete Fourier transform by a phase factor, as shown in formula (10):

$$s[((n-\delta_i))_N] = \frac{1}{N}\sum_{k=0}^{N-1} S[k]W_N^{-(n-\delta_i)k}$$

$$= \frac{1}{N}\sum_{k=0}^{N-1} (S[k]W_N^{\delta_i k})W_N^{-nk} \qquad (10)$$

A Fourier transform factor is $W_N = e^{-j\frac{2\pi}{N}}$, and sequences $s(n)$, $s((n-\delta_i))_N$, and S[k] represents a time domain sequence, a time domain sequence after a cyclic delay of $\delta_i$, and a frequency sequence corresponding to discrete Fourier transform, respectively. It can be known from the preceding formula that, applying a cyclic delay of $\delta_i$ to the time domain sequence is equivalent to multiplying the frequency domain sequence by the phase factor $W_N^{k\delta_i}$, and it can be inferred that the phase factor is related to the frequency domain sequence number k. Assuming a sequence of a space-time-frequency stream on a sub-array is S[k], an OFDM symbol s(n) is obtained after OFDM modulation. Cyclic delays $\delta_i$, i= 0,1,2,3 are applied on four respective array elements in the sub-array, and the corresponding frequency domain sequence before OFDM modulation is $S[k]W_N^{k\delta_i}$, which is equivalent to weighting a signal of a subcarrier with a weighting factor being $W_N^{k\delta_i}$. For weighted processing on a sub-array, a total weight vector is a product of multiplication of a basic weight vector and phase weighting factors formed through cyclic delaying:

$$\boldsymbol{w}_k = diag\left[\begin{array}{cccc} 1 & W_N^{k\delta_1} & W_N^{k\delta_2} & W_N^{k\delta_3} \end{array}\right] \cdot \boldsymbol{w} \qquad (11)$$

The total weight vector is a variable related to a subcarrier sequence number k, and therefore each subcarrier has a different weight vector and a different weight processing diagram. A beam pattern is related to a subcarrier position, which is expressed as:

$$g_k(\theta) = \boldsymbol{w}_k^H \boldsymbol{a}(\theta), \qquad k = 0,1,2,\dots N-1 \qquad (12)$$

N indicates a DFT length in OFDM, and its value is generally large, for example, 512 and 1024. Therefore, sufficient different beam patterns may be generated, and an average beam pattern thereof is isotropic.

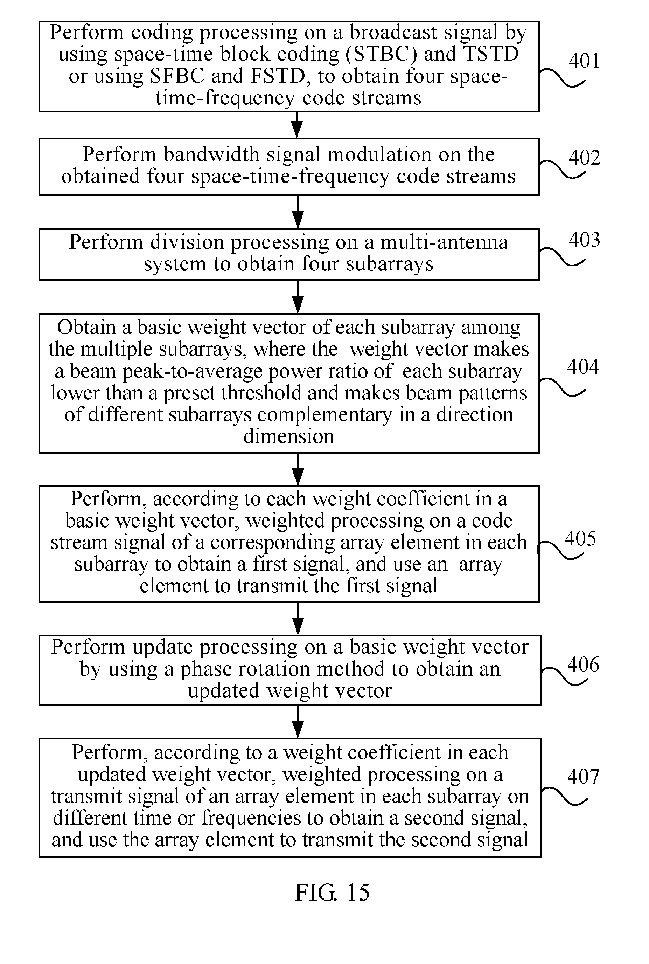

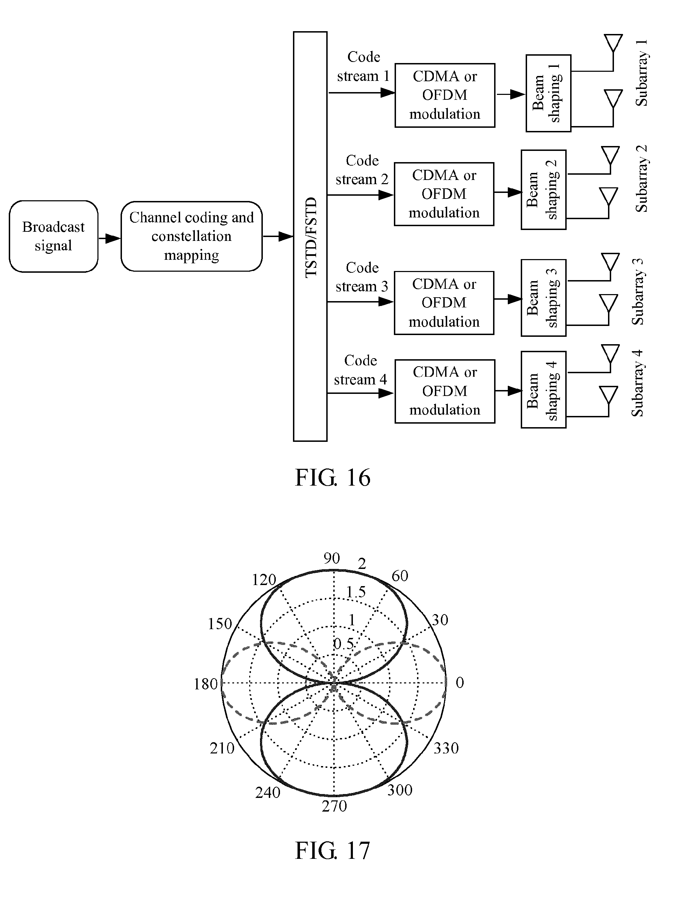

FIG. 15 is a flow chart of yet another embodiment of a method for transmitting a broadcast signal according to the present invention, and FIG. 16 is an elementary diagram of signal transmission based on time-switched transmit diversity (TSTD) or frequency-switched transmit diversity (FSTD) in the embodiment of the method for transmitting the broadcast signal according to the present invention. As shown in FIGs. 15 and 16, the method in the embodiment may include:

Step 401: Perform coding processing on a broadcast signal by using space-time block coding (Space-Time Block Coding, STBC for short) and time-switched transmit diversity (Time Switched Transmit Diversity, TSTD for short) or using space-frequency block coding (Space-Frequency Block Coding, SFBC for short) and frequency-switched transmit diversity, FSTD for short), to obtain four space-time-frequency code streams.

For example, the broadcast signal is specifically a bit stream of a multimedia broadcasting and multicasting service and a bit stream of a cell common control signal. In the embodiment, after channel coding and constellation mapping are performed on a broadcast signal and a (multiplexing) symbol stream is obtained, space-time-frequency coding is performed on a group of every four symbols in the (multiplexing) symbol stream, to generate four space-time-frequency code streams. A coding matrix is shown in the following formula:

$$[s_1 \quad s_2 \quad s_3 \quad s_4] \xrightarrow{STFBC+TFSTD} \begin{bmatrix} s_1 & s_2 & 0 & 0 \\ -s_2^* & s_1^* & 0 & 0 \\ 0 & 0 & s_3 & s_4 \\ 0 & 0 & -s_4^* & s_3^* \end{bmatrix} or \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

(13)

Each row of the obtained coding matrix corresponds to a sub-array, and each column of the coding matrix corresponds to a symbol transmit period of the time domain or a subcarrier of the frequency domain.

Step 402: Perform bandwidth signal modulation on the obtained four space-time-frequency code streams.

For example, for a narrowband communication system, symbols in space-time-frequency code streams may be transmitted directly in order and may not undergoes processing in this step; for a broadband communication system, code division multiple access (CDMA) modulation or orthogonal frequency division multiplexing (OFDM) modulation needs to be performed. In the embodiment, OFDM modulation is used only as an example for illustration. Firstly, subcarrier mapping is performed on the space-time-frequency code streams. Two different subcarrier mapping manners may be adopted for the symbols in the space-time-frequency code streams: (1) space-frequency mapping: Four modulation symbols of each space-time-frequency code stream are placed on four consecutive subcarriers on a corresponding subcarrier; (2) space-time mapping: Four modulation symbols of each space-time-frequency code stream are placed on the same subcarrier of four consecutive OFDM symbols on a corresponding sub-array; (3) space-time-frequency mapping: Four modulation symbols of each space-time-frequency code stream are placed on two consecutive subcarriers of two consecutive OFDM symbols on a corresponding sub-array. According to time frequency resource correlation of OFDM symbols, the preceding three subcarrier mapping manners are equivalent. OFDM modulation processing is performed on the space-time-frequency code streams that have undergone mapping, that is, performing inverse fast Fourier transform (IFFT) on block data, and then inserting a cyclic prefix (CP).

Step 403: Perform dividing processing on a multi-antenna system to obtain four sub-arrays.

In the embodiment, after TSTD or FSTD is used for coding processing, four space-time-frequency code streams are obtained. Therefore, dividing processing is performed on the multi-antenna system to obtain four sub-arrays and a basic weight vector is selected for each sub-array, so that a beam pattern has wide coverage angle and low peak-to-average ratio and the average beam pattern for beam patterns of the four sub-arrays has gains in all directions that are equal or whose difference is smaller than a preset value. A uniformly distributed 8-array element ULA with half a wavelength as an interval is used as an example to introduce in detail the technical solution in the embodiment. The embodiment does not limit the specifically used antenna array, and those skilled in the art can use an antenna array in any antenna array shape, of any antenna quantity, and with another interval between array elements according to requirements. Specifically, dividing processing is performed on the antenna array with two adjacent array elements as a sub-array, to obtain four sub-arrays, each of which has two adjacent array elements. Direction vectors of the antenna array may be divided into four two-dimension direction vectors. With a first array element of ULA as a reference point, the four direction vectors are shown in formula (14):

$$\begin{cases} a_1(\theta) = \begin{bmatrix} 1 & e^{-j\pi \sin(\theta)} \end{bmatrix}^T \\ a_2(\theta) = \begin{bmatrix} e^{-j2\pi \sin(\theta)} & e^{-j3\pi \sin(\theta)} \end{bmatrix}^T \\ a_3(\theta) = \begin{bmatrix} e^{-j4\pi \sin(\theta)} & e^{-j5\pi \sin(\theta)} \end{bmatrix}^T \\ a_4(\theta) = \begin{bmatrix} e^{-j6\pi \sin(\theta)} & e^{-j7\pi \sin(\theta)} \end{bmatrix}^T \end{cases}$$

(14)

Step 404: Obtain a basic weight vector of each sub-array among the multiple sub-arrays, where the basic weight vector makes a beam peak-to-average power ratio of each sub-array lower than a preset threshold and makes beam patterns of different sub-arrays complementary to each other in a direction dimension.

In the embodiment, the obtained four basic weight vectors make beam patterns of the four sub-arrays have wide coverage angle and low peak-to-average ratio and make an average beam pattern for the beam patterns of the four sub-arrays has gain differences equal to zero or smaller than a preset threshold in all directions of cells or sectors.

For example, the four basic weight vectors are as follows:

$$\begin{cases} w_1 = \begin{bmatrix} 1 & 1 \end{bmatrix}^T, & w_2 = \begin{bmatrix} 1 & -1 \end{bmatrix}^T \\ w_3 = \begin{bmatrix} 1 & i \end{bmatrix}^T, & w_4 = \begin{bmatrix} 1 & -i \end{bmatrix}^T \end{cases}$$

FIG. 17 shows beam patterns and an average beam pattern of basic weight vectors in the embodiment of the method for transmitting the broadcast signal according to the present invention shown in FIG. 15. As shown in FIG. 17, the average beam pattern has equal gains in all directions.

Step 405: Perform, according to each weight coefficient in a basic weight vector, weighted processing on a code stream signal of a corresponding array element in each sub-array to obtain a first signal, and use the array element to transmit the first signal.

Step 406: Perform update processing on a basic weight vector by using a phase rotation method, to obtain an updated weight vector.

Step 407: Perform, according to a weight coefficient in each updated weight vector, weighted processing on a transmit signal of an array element in each sub-array at different time or on a different frequency to obtain a second signal, and use the array element to transmit the second signal.

When the number of antenna array elements in each sub-array is large, computation amount for selecting basic weight vectors corresponding to fully complementary beam patterns is too large; or because of engineering factors such as errors on physical positions of antennas or on feeder phases of different array elements, a large deviation between an actual beam pattern and a theoretic computation result exists, and transmit power of the multi-antenna system is different in some degree in different directions. To enhance coverage performance and robustness, the phase rotation method may be used to perform update processing on the basic weight vector in the time dimension or the frequency dimension and obtain a time or frequency diversity, so that the transmit power is equal in all directions. The implementation manner of performing update processing on a basic weight vector in the time dimension or the frequency dimension by using the phase rotation method in the step 406 is similar to the implementation manner of performing update processing on a basic weight vector in the time dimension or the frequency dimension by using the phase rotation method in step 306 of FIG. 7.

Further, step 406 may also be performing update processing on a basic weight vector in the time dimension or the frequency dimension by using a random variable method, performing weighted processing on a transmit signal in a different time resource or in a different frequency resource by using an updated weight vector, and obtaining a time or frequency diversity.

Specifically, four weight coefficients are randomly selected from a unit circle of complex number coordinates. Assuming the selected weight coefficients are $\pm 1$ and $\pm i$. The following four updated weight vectors are constructed:

$w_1 = [1, -1]^T$, $w_2 = [1,1]^T$, $w_3 = [i,-i]^T$, $w_4 = [i, i]^T$. The beam patterns are shown in the figure, and every two beam patterns are complementary to each other. When a weight vector needs to be updated, four weight coefficients are randomly selected from the unit circle of complex number coordinates again, and four new weight vectors are constructed according to the preceding method.

In the embodiment, coding processing is performed on the broadcast signal by using TSTD or FSTD to obtain four space-time-frequency code streams, and thereby, dividing processing is correspondingly performed on the antenna array to obtain four sub-arrays. Basic weight vectors of four complementary beam patterns are selected, and a corresponding weight coefficient in a basic weight vector is selected for an array element in each sub-array, and the space-time-frequency code streams are weighted and transmitted.

Further, in the method, a delaying method or a cyclic delaying method may also be used to obtain a second signal, so as to achieve full coverage in a cell or sector more effectively.

For example, a basic weight vector is selected for each sub-array, and beam patterns of sub-arrays are made to be complementary to each other after weighted processing. OFDM modulation is performed on a first space-time-frequency code stream of the four space-time-frequency code streams to obtain an OFDM symbol, the OFDM symbol is weighted by using a first weight coefficient in a corresponding basic weight vector to obtain a second signal, delaying processing is not performed, and the second signal is transmitted by a first array element of a sub-array; the OFDM signal is weighted by using a second weight coefficient and undergoes cyclic delaying processing, and then a second signal is transmitted by a second array element. A second sub-array transmits a second space-time-frequency code stream of the four space-time-frequency code streams, and the cyclic delaying method is the same as that for the first sub-array. The transmission method of a third sub-array and a fourth sub-array are the same as the method of the first sub-array, and is not detailed herein again. The implementation manner of the cyclic delaying method used in the embodiment is similar to the implementation manner of the cyclic delaying method shown in FIG. 8.

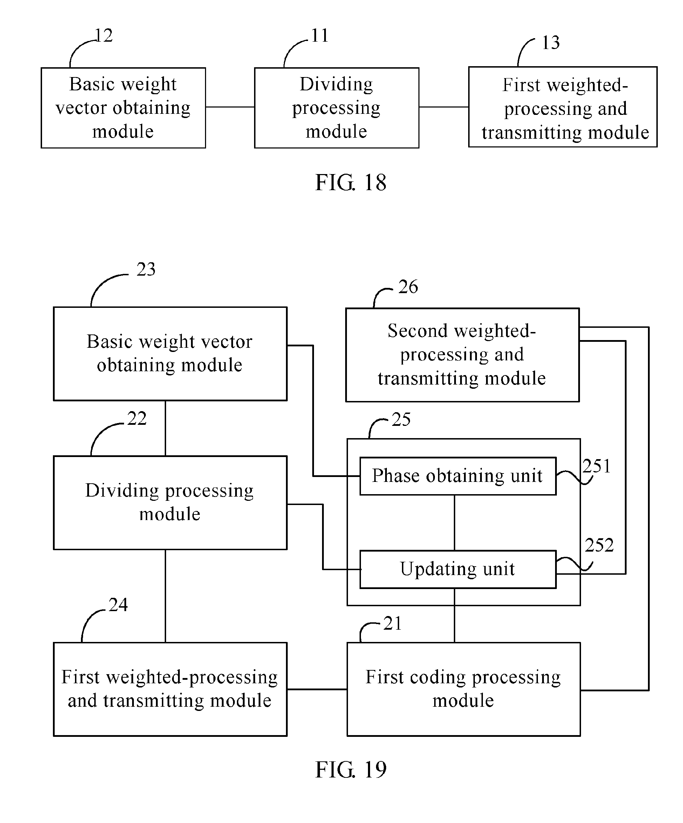

FIG. 18 is a schematic structural diagram of an embodiment of an apparatus for transmitting a broadcast signal according to the present invention. As shown in FIG. 18, the apparatus for transmitting the broadcast signal in the embodiment includes: a dividing processing module 11, a basic weight vector obtaining module 12, and a first weighted-processing and transmitting module 13. The dividing processing module 11 is configured to perform dividing processing on an antenna array in a multi-antenna system to obtain multiple sub-arrays; the basic weight vector obtaining module 12 is configured to obtain a basic weight vector of each sub-array among the multiple sub-arrays, where the basic weight vector makes a beam peak-to-average power ratio of each sub-array lower than a preset threshold and makes beam patterns of different sub-arrays complementary to each other in a direction dimension; a first weighted-processing and transmitting module 13 is configured to perform, according to a weight coefficient in each basic weight vector, on a transmit signal of an array element in a sub-array corresponding to each basic weight vector to obtain a first signal, and use the array element to transmit the first signal.

The apparatus for transmitting the broadcast signal provided in the embodiment can be used to implement the technical solution in the method embodiment shown in FIG. 1. The implementation principle is similar and is not detailed herein again.

In the embodiment, dividing processing is performed on the antenna array in the multi-antenna system to obtain multiple sub-arrays, and the basic weight vector of each sub-array among the multiple sub-arrays is obtained, where the basic weight vector makes the beam peak-to-average power ratio of each sub-array lower than the preset threshold and makes beam patterns of different sub-arrays complementary to each other in the direction dimension. According to the weight coefficient in each basic weight vector, weighted processing is performed on the transmit signal of the array element in the sub-array corresponding to each basic weight vector to obtain the first signal, and the array element is used to transmit the first signal. The beam pattern of each sub-array has wide coverage angle and low peak-to-average power ratio, and the average beam pattern for beam patterns of all sub-arrays has gain differences equal to zero or smaller than a preset value in all directions of all cells or sectors, which makes the transmit power of the multi-antenna system is equal in all directions, implements full coverage of the broadcast signal from the multi-antenna system in all directions in a cell or a sector, and effectively reduces economic cost.

FIG. 19 is a schematic structural diagram of another embodiment of an apparatus for transmitting a broadcast signal according to the present invention. As shown in FIG. 19, the apparatus for transmitting the broadcast signal in the embodiment includes: a first coding processing module 21, a dividing processing module 22, a basic weight vector obtaining module 23, a first weighted-processing and transmitting module 24, an updating module 25, and a second weighted-processing and transmitting module 26. The first coding processing module 21 is configured to perform channel coding processing, constellation modulation processing, and space-time-frequency coding processing on a broadcast signal to obtain multiple code stream signals. The basic weight vector obtaining module 23 is configured to obtain a basic weight vector of each sub-array among the multiple sub-arrays, where the basic weight vector makes a beam peak-to-average power ratio of each sub-array lower than a preset threshold and makes beam patterns of different sub-arrays complementary to each other in a direction dimension; The first weighted-processing and transmitting module 24 is configured to perform, according to a weight coefficient in each basic weight vector, on a transmit signal of an array element in a sub-array corresponding to each basic weight vector to obtain a first signal, and use the array element to transmit the first signal. The updating module 25 is configured to perform update processing on each basic weight vector in the time dimension or the frequency dimension to obtain an updated weight vector; the second weighted-processing and transmitting module 26 is configured to perform, according to a weight coefficient in each updated weight vector, weighted processing on the transmit signal of the array element in each sub-array at different time or on a different frequency to obtain a second signal, and use the array element to transmit the second signal.

In the embodiment, the dividing processing module 22 includes a first processing unit or a second processing unit or a third processing unit. The first processing unit is configured to perform logic dividing processing on a single antenna array; the second processing unit is configured to perform dividing processing on multiple antenna arrays according to a spacing distance; the third processing unit is configured to perform dividing processing on a polarized antenna array according to a polarization direction.

In the embodiment, the updating module 25 may include a phase obtaining unit 251 and an updating unit 252. The phase obtaining unit 251 is configured to obtain a phase value $\Delta\phi$; the updating unit 252 is configured to perform update processing on each basic weight vector $w = [w_1, w_2, \cdots w_M]^T$ by using a formula $w_{New} = diag[1\ e^{j\Delta\phi}\ e^{j2\Delta\phi} \cdots e^{j(M-1)\Delta\phi}] \cdot w$ to separately obtain updated weight vectors. $w_{New}$ indicates an updated weight vector, j is an imaginary number unit, and $diag[x_1...x_n]$ is a diagonal array formed by $x_1$ to $x_n$.

The apparatus for transmitting the broadcast signal in the embodiment may be used to implement the technical solution in any method embodiment shown in FIGs. 2 to 17. The implementation principle is similar and is not detailed herein again.

In the embodiment, the dividing processing module performs dividing processing on antenna arrays in the multi-antenna system by using different dividing methods; obtains the basic weight vector of each sub-array among the multiple sub-arrays, where the basic weight vector makes the beam peak-to-average power ratio of each sub-array lower than the preset threshold and makes the beam patterns of different sub-arrays complementary to each other in the direction dimension; performs weighted processing on the transmit signal of the array element in each sub-array according to the weight coefficient in each basic weight vector; and uses the array element to transmit a signal after weighted processing. Meanwhile, a basic weight vector is updated by using a phase rotation method to obtain an updated weight vector, weighted processing is performed, according to a weight coefficient in the updated weight vector, on a transmit space-time-frequency code stream of the array element in each sub-array to obtain a second signal, and use the array element to transmit the second signal. Thereby, transmit power of the multi-antenna system is made to be better isotropic, and further it is ensured that all mobile terminals can receive signals of the same quality, and then full coverage of the broadcast signal from the multi-antenna system in cells or sectors is more effectively implemented.

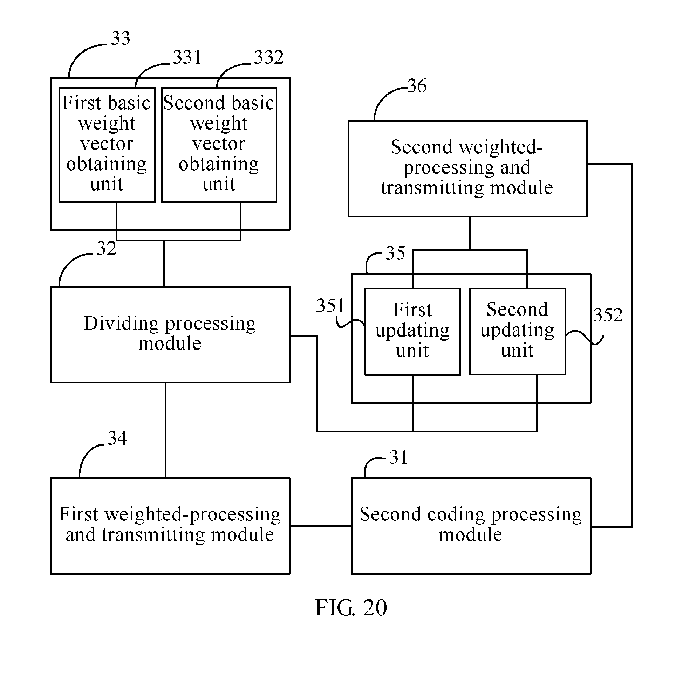

FIG. 20 is a schematic structural diagram of yet another embodiment of an apparatus for transmitting a broadcast signal according to the present invention. As shown in FIG. 20, the apparatus for transmitting the broadcast signal in the embodiment includes: a second coding processing module 31, a dividing processing module 32, a basic weight vector obtaining module 33, a first weighted-processing and transmitting module 34, an updating module 35, and a second weighted-processing and transmitting module 36. The second coding processing module 31 is configured to perform channel coding processing and constellation modulation processing on a broadcast signal to obtain multiple symbol streams. The first weighted-processing and transmitting module 34 is configured to perform, according to a weight coefficient in each basic weight vector, weighted processing on a transmit signal of an array element in a sub-array corresponding to each basic weight vector to obtain a first signal, and use the array element to transmit the first signal. The updating module 35 is configured to perform update processing on each basic weight vector in the time dimension or the frequency dimension to obtain an updated weight vector; the second weighted-processing and transmitting module 36 is configured to perform, according to a weight coefficient in each updated weight vector, weighted processing on the transmit signal of the array element in each sub-array at different time or on a different frequency to obtain a second signal, and use the array element to transmit the second signal.

In the embodiment, the basic weight vector obtaining module 33 may include a first basic weight vector obtaining unit 331 and a second basic weight vector obtaining unit 332. The first basic weight vector obtaining unit 331 is configured to select two first weight coefficients with equal moduli to form a basic weight vector corresponding to one sub-array of the two sub-arrays; the second basic weight vector obtaining unit 332 is configured to obtain a negative value for one of the two first weight coefficients with equal moduli to form a basic weight vector corresponding to the other sub-array of the two sub-arrays.

The updating module 35 may include a first updating unit 351 and a second updating unit 352. The first updating unit 351 is configured to select two second weight coefficients with same moduli for two complementary sub-arrays among the multiple sub-arrays, every two of which are complementary to each other, to form an updated weight vector corresponding to one sub-array of the two sub-arrays. The second updating unit 352 is configured to obtain a negative value for one of the two first weight coefficients with equal moduli to form a basic weight vector corresponding to the other sub-array of the two complementary sub-arrays among the multiple sub-arrays, every two of which are complementary to each other.

The apparatus for transmitting the broadcast signal in the embodiment can be used to implement the technical solution in any method embodiment shown in FIGs. 2 to 17. The implementation principle is similar and is not detailed herein again.

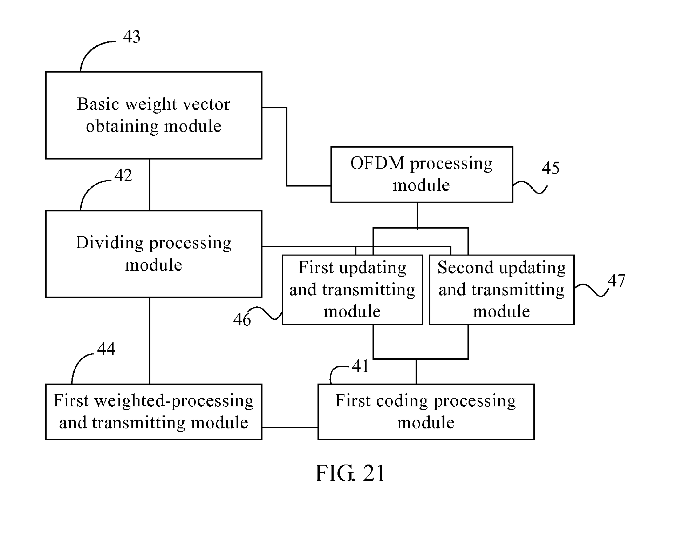

FIG. 21 is a schematic structural diagram of yet another embodiment of an apparatus for transmitting a broadcast signal according to the present invention. As shown in FIG. 21, the apparatus for transmitting the broadcast signal in the embodiment includes: a first coding processing module 41, a dividing processing module 42, a basic weight vector obtaining module 43, a first weighted-processing and transmitting module 44, an OFDM processing module 45, a first updating and transmitting module 46, and a second updating and transmitting module 47. The first coding processing module 41 is configured to perform channel coding processing, constellation modulation processing, and space-time-frequency coding processing on a broadcast signal to obtain multiple code stream signals. The basic weight vector obtaining module 43 is configured to obtain a basic weight vector of each sub-array among multiple sub-arrays, where the basic weight vector makes a beam peak-to-average power ratio of each sub-array lower than a preset threshold and makes beam patterns of different sub-arrays complementary to each other in a direction dimension; the first weighted-processing and transmitting module 44 is configured to perform, according to a weight coefficient in each basic weight vector, weighted processing on a transmit signal of an array element in a sub-array corresponding to each basic weight vector, and use the array element to transmit a first signal after weighted processing; the OFDM processing module 45 is configured to perform orthogonal frequency division multiplexing modulation processing on the transmit signal of the array element in each sub-array and obtain an orthogonal frequency division multiplexing signal corresponding to the array element in each sub-array; the first updating and transmitting module 46 is configured to perform, according to a first weight coefficient in each basic weight vector, weighted processing on the orthogonal frequency division multiplexing signal to obtain a second signal, and use a first array element in a sub-array to transmit the second signal. The second updating and transmitting module 47 is configured to perform, according to a second weight coefficient to a last weight coefficient in each basic weight vector, weighted processing and delaying processing on the orthogonal frequency division multiplexing signal to obtain second signals, and separately use a second array element to a last array element of a sub-array to transmit the second signals.

Further, the apparatus for transmitting the broadcast signal may also include a delaying processing module, which is configured to perform delaying processing on each signal after weighted processing of an array element in each sub-array to obtain a second signal and use the array element to transmit the second signal.

The apparatus for transmitting the broadcast signal provided in the embodiment can be used to implement the technical solutions in the embodiments shown in FIGs. 2 to 17. The implementation principle is similar and is not detailed herein again.

In the embodiment, dividing processing is performed on the antenna array by adopting different manners to obtain multiple sub-arrays, and the basic weight vector of each sub-array among the multiple sub-arrays is obtained, where the basic weight vector makes the beam peak-to-average power ratio of each sub-array lower than the preset threshold and makes the beam patterns of different sub-arrays complementary to each other in the direction dimension; according to the weight coefficient in each basic weight vector, weighted processing is performed on a transmit space-time-frequency code stream of the array element in each sub-array, and the array element is used to transmit the first signal after weighted processing. Thereby, a beam of each sub-array is made to have a wide coverage angle, low peak-to-average power ratio, and to be complementary in the direction dimension. Update processing is performed continuously on the basic weight vector by using a cyclic delay method to obtain the updated weight vector, and according to the updated weight vector, weighted processing is performed on the transmit space-time-frequency code stream of the array element in each sub-array to obtain the second signal, and the array element is used to transmit the second signal. Thereby, average transmit power of beam patterns of sub-arrays is made to be better isotropic, and further it is ensured that all mobile terminals in a cell can receive signals of the same quality, and full coverage of the broadcast signal from the multi-antenna system in a cell or a sector is more effectively implemented.

Those skilled in the art can understand that all or part of the steps in the foregoing method embodiments may be completed by a program instructing hardware. The program may be stored in a computer-readable storage medium. The program implements the steps in the preceding methods when being executed. The storage medium may include various media that can store program codes, such as ROM/RAM, magnetic disk, or compact disk.

It should be noted that the preceding embodiments are only used to illustrate the technical solutions of the present invention, but are not intended to limit them. Although the present invention is illustrated in detail with reference to the preceding embodiments, those skilled in the art should understand that they still can make modifications to the technical solutions described in the embodiments of the present invention or make equivalent replacements to some technical features in the technical solutions of the present invention. These modifications or replacements do not make corresponding technical solutions depart from the spirit and scope of the technical solutions in the embodiments of the present invention.

## Claims

1. A method for transmitting a broadcast signal, comprising:

   performing dividing processing on an antenna array in a multi-antenna system to obtain multiple sub-arrays;
   obtaining a basic weight vector of each sub-array among the multiple sub-arrays, wherein the basic weight vector makes a beam peak-to-average power ratio of each sub-array lower than a preset threshold and makes beam patterns of different sub-arrays complementary to each other in a direction dimension; and
   performing, according to a weight coefficient in each basic weight vector, weighted processing on a transmit signal of an array element in a sub-array corresponding to each basic weight vector to obtain a first signal, and using the array element to transmit the first signal.

2. The method for transmitting the broadcast signal according to claim 1, wherein performing dividing processing on the antenna array in the multi-antenna system comprises:

   performing logic dividing processing on a single antenna array; or
   performing dividing processing on multiple antenna arrays according to a spacing distance; or
   performing dividing processing on a polarized antenna array according to a polarization direction.

3. The method for transmitting the broadcast signal according to any one of claims 1 or 2, further comprising:

performing update processing on each basic weight vector in a time dimension or a frequency dimension and separately obtaining an updated weight vector; and

performing, according to a weight coefficient in each updated weight vector, weighted processing on the transmit signal of the array element in each sub-array at different time or on s different frequency to obtain a second signal, and use the array element to transmit the second signal.

4. The method for transmitting the broadcast signal according to claim 3, wherein the performing update processing on the each basic weight vector in a time dimension or a frequency dimension and separately obtaining an updated weight vector comprises:

obtaining a phase value $\Delta\phi$; and

performing update processing on each basic weight vector $w = [w_1, w_2, \cdots w_M]^T$ by using a formula $w_{New} = diag [1\ e^{j\Delta\phi}\ e^{j2\Delta\phi} \cdots\ e^{j(M-1)\Delta\phi}]w$, and separately obtaining the updated weight vector;

$w_{New}$ indicates the updated weight vector, j is an imagery unit, and $diag[x_1...x_n]$ is a diagonal array formed by $x_1$ to $x_n$.

5. The method for transmitting the broadcast signal according to any one of claims 1 or 2, further comprising:

performing delaying processing in order on the first signal of the array element in each sub-array, wherein the first signal is obtained after weighted processing, to obtain a second signal, and use the array element to transmit the second signal.

6. The method for transmitting the broadcast signal according to any one of claims 1 or 2, further comprising:

performing orthogonal frequency division multiplexing modulation processing on the transmit signal of each sub-array, and obtaining an orthogonal frequency division multiplexing signal corresponding to each sub-array;
performing, according to a first weight coefficient in each basic weight vector, weighted processing on the orthogonal frequency division multiplexing signal to obtain a second signal, and using a first array element in the sub-array to transmit the second signal; and
performing, according to a second weight coefficient to a last weight coefficient in each basic weight vector, weighted processing and cyclic delaying processing on the orthogonal frequency division multiplexing signal to obtain second signals, and separately using a second array element to a last array element of the sub-array to transmit the second signals.

7. The method for transmitting the broadcast signal according to claim 3, wherein: if dividing processing is performed on the antenna array of the multiple antenna system to obtain multiple sub-arrays, every two of which are complementary to each other, and each sub-array comprises two array elements, the obtaining a basic weight vector of each sub-array among the multiple sub-arrays, wherein the basic weight vector makes a beam power-to-average power ratio of each sub-array lower then a preset threshold and makes beam patterns of different sub-arrays complementary to each other in a direction dimension comprises:

Selecting two first weight coefficients with equal moduli separately for two complementary sub-arrays among the multiple sub-arrays, every two of which are complementary to each other, to form a basic weight vector corresponding to one sub-array of the two complementary sub-arrays; and
obtaining a negative value for one of the two first weight coefficients with equal moduli to form a basic weight vector corresponding to the other sub-array of the two complementary sub-arrays among the multiple sub-arrays, every two of which are complementary to each other.

8. The method for transmitting the broadcast signal according to claim 7, wherein: if the sub-array comprises two array elements, the performing update processing on the each basic weight vector in a time dimension or a frequency dimension and separately obtaining an updated weight vector comprises:

selecting two second weight coefficients with equal moduli to form an updated weight vector corresponding to one sub-array of the two sub-arrays; and
obtaining a negative value for one of the two second weight coefficients with equal moduli to form an updated weight vector corresponding to the other sub-array of the two sub-arrays.

9. The method for transmitting the broadcast signal according to claim 3, wherein before performing dividing processing on the antenna array in the multi-antenna system to obtain multiple sub-arrays, the method further comprises:

performing channel coding processing, constellation modulation processing, and space-time-frequency coding processing on the broadcast signal to obtain multiple code stream signals; or
performing channel coding processing and constellation modulation processing on the broadcast signal to obtain multiple symbol streams.

10. The method for transmitting the broadcast signal according to claim 9, wherein the space-time-frequency coding specifically comprises Alamouti coding, space-time block coding, space-frequency block coding, time-switched transmit diversity, or frequency-switched transmit diversity.

11. An apparatus for transmitting a broadcast signal, comprising:

a dividing processing module, configured to perform dividing processing on an antenna array in a multi-antenna system to obtain multiple sub-arrays;
a basic weight vector obtaining module, configured to obtain a basic weight vector of each sub-array among the multiple sub-arrays, wherein the basic weight vector makes a beam peak-to-average power ratio of each sub-array lower than a preset threshold and makes beam patterns of different sub-arrays complementary to each other in a direction dimension; and
a first weighted-processing and transmitting module, configured to perform, according to a weight coefficient in each basic weight vector, weighted processing on a transmit signal of an array element in a sub-array corresponding to the each basic weight vector to obtain a first signal, and use the array element to transmit the first signal.

12. The apparatus for transmitting the broadcast signal according to claim 11, wherein the dividing processing module comprises:

a first processing unit, configured to perform logic dividing processing on a single antenna array; or
a second processing unit, configured to perform dividing processing on multiple antenna arrays according to a spacing distance; or
a third processing unit, configured to perform dividing processing on a polarized antenna array according to a polarization direction.

13. The apparatus for transmitting the broadcast signal according to any one of claims 11 or 12, further comprising:

an updating module, configured to perform update processing on the each basic weight vector in a time dimension or a frequency dimension and obtain an updated weight vector; and
a second weighted-processing and transmitting module, configured to perform, according to a weight coefficient in each updated weight vector, weighted processing on the transmit signal of the array element in each sub-array at different time or on a different frequency to obtain a second signal, and use the array element to transmit the second signal.

14. The apparatus for transmitting the broadcast signal according to claim 13, wherein the updating module comprises:

a phase obtaining unit, configured to obtain a phase value $\Delta\phi$;
an updating unit, configured to perform update processing on each basic weight vector $w = [w_1, w_2, \cdots w_M]^T$. by using a formula $w_{New} = diag[1 \ e^{j\Delta\phi} \ e^{j2\Delta\phi} \cdots e^{j(M-1)\Delta\phi}] \cdot w$ , and separately obtain an updated weight vector;
$w_{New}$ indicates the updated weight vector, j is an imaginary number unit, and $diag[x_1...x_n]$ is a diagonal array formed by $x_1$ to $x_n$.

15. The apparatus for transmitting the broadcast signal according to any one of claims 11 or 12, further comprising:

a delaying processing module, configured to perform delaying processing on the first signal of the array element in each sub-array, wherein the first signal is obtained after weighted processing, to obtain a second signal, and use the array element to transmit the second signal.

16. The apparatus for transmitting the broadcast signal according to any one of claims 11 or 12, further comprising:

an orthogonal frequency division multiplexing modulation processing module, configured to perform orthogonal frequency division multiplexing modulation processing on the transmit signal of each sub-array and obtain an orthogonal frequency division multiplexing signal corresponding to each sub-array;

a first updating and transmitting module, configured to perform, according to a first weight coefficient in each basic weight vector, weighted processing on the orthogonal frequency division multiplexing signal to obtain a second signal, and use a first array element in the sub-array to transmit the second signal; and

a second updating and transmitting module, configured to perform, according to a second weight coefficient to a last weight coefficient in each basic weight vector, weighted processing and cyclic delaying processing on the orthogonal frequency division multiplexing signal to obtain second signals, and separately use a second array element to a last array element of the sub-array to transmit the second signals.

17. The apparatus for transmitting the broadcast signal according to claim 13, wherein: if dividing processing is performed on the antenna array of the multiple antenna system to obtain multiple sub-arrays, every two of which are complementary to each other, and the each sub-array comprises two array elements, the basic weight vector obtaining module comprises:

a first basic weight vector obtaining unit, configured to select two first weight coefficients with equal moduli separately for two complementary sub-arrays among the multiple sub-arrays, every two of which are complementary to each other, to form a basic weight vector corresponding to one sub-array of the two complementary sub-arrays; and

a second basic weight vector obtaining unit, configured to select a negative value for one of the two first weight coefficients with equal moduli to form a basic weight vector corresponding to the other sub-array of the two complementary sub-arrays among the multiple sub-arrays, every two of which are complementary to each other.

18. The apparatus for transmitting the broadcast signal according to claim 17, wherein the updating module comprises:

a first updating unit, configured to select two second weight coefficients with equal moduli to form an updated weight vector corresponding to one sub-array of the two sub-arrays; and

a second updating unit, configured to select a negative value for one of the two second weight coefficients with equal moduli to form an updated weight vector corresponding to the other sub-array of the two sub-arrays.

19. The apparatus for transmitting the broadcast signal according to claim 13, further comprising:

a first coding processing module, configured to perform channel coding processing, constellation modulation processing, and space-time-frequency coding processing on the broadcast signal to obtain multiple code stream signals; and

a second coding processing module, configured to perform channel coding processing and constellation modulation processing on the broadcast signal to obtain multiple symbol streams.

Perform dividing processing on an antenna array in a multi-antenna system to obtain multiple subarrays

101

Obtain a basic weight vector of each subarray among the multiple subarrays, where a weight vector makes a beam peak-to-average power ratio of each subarray lower than a preset threshold and makes beam patterns of different subarrays complementary to each other in a direction dimension

102

Perform, according to a weight coefficient in each basic weight vector, weighted processing on a transmit signal of an array element in a subarray corresponding to the each basic weight vector to obtain a first signal, and use the array element to transmit the first signal.

103

FIG. 1

| Perform channel coding processing, constellation modulation processing, and space-time-frequency coding processing on a broadcast signal to obtain multiple code stream signals | 201 |

| Perform logic dividing processing on a single antenna array to obtain multiple subarrays | 202 |

| Obtain a basic weight vector of each subarray among the multiple subarrays, where a weight vector makes a beam peak-to-average power ratio of each subarray lower than a preset threshold and makes beam patterns of different subarrays complementary to each other in a direction dimension | 203 |

| Perform, according to a weight coefficient in each basic weight vector, weighted processing on a code stream signal of an array element in each subarray to obtain a first signal, and use the array element to transmit the first signal | 204 |

| Perform update processing on the each basic weight vector in a time dimension or a frequency dimension and separately obtain an updated weight vector | 205 |

| Perform, based on a weight coefficient in each updated weight vector, weighted processing on a transmit signal of an array element in each subarray on different time or frequencies to obtain a second signal, and use the array element to transmit the second signal | 206 |

FIG. 2

FIG. 3

FIG. 4

FIG. 5

FIG. 6

FIG. 7

Perform channel coding processing, constellation modulation processing, and Alamouti coding processing on a broadcast signal to obtain two space-time-frequency code streams ⟩ 301

↓

Perform broadband signal modulation on the obtained two space-time-frequency code streams ⟩ 302

↓

Perform division processing on the multi-antenna system to obtain two subarrays, each of which is used to transmit a space-time-frequency code stream ⟩ 303

↓

Obtain a basic weight vector of each subarray among the two subarrays, in which the basic weight vector makes a beam peak-to-average power ratio of each subarray lower than a preset threshold and makes beam patterns of the two subarrays complementary to each other in a direction dimension ⟩ 304

↓

Perform, according to a weight coefficient in each basic weight vector, weighted processing on a space-time-frequency code stream of an array element in a subarray corresponding to the each basic weight vector to obtain a first signal, and use an array element to transmit the first signal ⟩ 305

↓

Perform update processing on a basic weight vector in a time dimension or a frequency dimension by using a phase rotation method to obtain an updated weight vector ⟩ 306

↓

Perform, according to a weight coefficient in each updated weight vector, weighted processing on a transmit signal of an array element in each subarray on different time or frequencies to obtain a second signal, and use the array element to transmit the second signal ⟩ 307

FIG. 8

FIG. 9

FIG. 10

**Space-time mapping**

FIG. 11

**Space-frequency mapping**

Subcarrier $s_1$

Subcarrier $s_2$

FIG. 12

FIG. 13

FIG. 14

Perform coding processing on a broadcast signal by using space-time block coding (STBC) and TSTD or using SFBC and FSTD, to obtain four space-time-frequency code streams — 401

Perform bandwidth signal modulation on the obtained four space-time-frequency code streams — 402

Perform division processing on a multi-antenna system to obtain four subarrays — 403

Obtain a basic weight vector of each subarray among the multiple subarrays, where the weight vector makes a beam peak-to-average power ratio of each subarray lower than a preset threshold and makes beam patterns of different subarrays complementary in a direction dimension — 404

Perform, according to each weight coefficient in a basic weight vector, weighted processing on a code stream signal of a corresponding array element in each subarray to obtain a first signal, and use an array element to transmit the first signal — 405

Perform update processing on a basic weight vector by using a phase rotation method to obtain an updated weight vector — 406

Perform, according to a weight coefficient in each updated weight vector, weighted processing on a transmit signal of an array element in each subarray on different time or frequencies to obtain a second signal, and use the array element to transmit the second signal — 407

FIG. 15

FIG. 16

FIG. 17

```
    ┌12                    ┌11                    ┌13
┌──────────────┐   ┌──────────────┐   ┌──────────────┐
│ Basic weight │   │   Dividing   │   │ First weighted-│
│vector obtaining├──┤  processing  ├──┤ processing and │
│    module    │   │    module    │   │transmitting module│
└──────────────┘   └──────────────┘   └──────────────┘
```

FIG. 18

```
    ┌23                                    ┌26
┌──────────────────┐        ┌──────────────────┐
│  Basic weight vector │        │   Second weighted- │
│  obtaining module  │        │   processing and   │
└──────────────────┘        │ transmitting module │
         ┌22                └──────────────────┘
┌──────────────────┐              ┌25
│ Dividing processing │   ┌──────────────────────┐
│      module       │   │ ┌──────────────────┐ 251│
└──────────────────┘   │ │ Phase obtaining unit ├──┘ │
         ┌24            │ └──────────────────┘      │
┌──────────────────┐   │ ┌──────────────────┐ 252│
│First weighted-processing│ │  Updating unit   ├──┘ │
│and transmitting module │ └──────────────────┘      │
└──────────────────┘   └──────────────────────┘
                          ┌21
                   ┌──────────────────┐
                   │ First coding processing │
                   │      module       │
                   └──────────────────┘
```

FIG. 19

33

331    332

First basic
weight
vector
obtaining
unit

Second basic
weight
vector
obtaining
unit

36

Second weighted-
processing and
transmitting module

32

Dividing processing
module

35

351

First
updating
unit

Second
updating
unit

352

34

First weighted-processing
and transmitting module

31

Second coding processing
module

FIG. 20

43

Basic weight vector
obtaining module

OFDM processing
module

45

42

Dividing processing
module

First updating
and transmitting
module

Second updating
and transmitting
module

47

46

44

41

First weighted-processing
and transmitting module

First coding processing
module

FIG. 21

# INTERNATIONAL SEARCH REPORT

| | International application No. |
|---|---|
| | PCT/CN2011/071362 |

**A. CLASSIFICATION OF SUBJECT MATTER**

H04W 88/00 (2009.01) i

According to International Patent Classification (IPC) or to both national classification and IPC

**B. FIELDS SEARCHED**

Minimum documentation searched (classification system followed by classification symbols)

IPC: H04W88, H04B7, H04L, H04Q, H04M1

Documentation searched other than minimum documentation to the extent that such documents are included in the fields searched

Electronic data base consulted during the international search (name of data base and, where practicable, search terms used)

WPI, EPODOC, VEN, CPRS, CPRSABS, CNKI: multi, multiple, antenna, antennae, aerial w array, intelligent w antenna, MIMO, divide separate, group, grouping, sub, unit, weight, power, pattern, peak, average, threshold

**C. DOCUMENTS CONSIDERED TO BE RELEVANT**

| Categ | Citation of document, with indication, where appropriate, of the relevant passages | Relevant to claim No. |
|---|---|---|
| | CN101359947A (DA TANG MOBILE COMMUNICATION APPARATUS CO.,LTD.) 04 Feb. 2009 (04.02.2009) | |
| X | Abstract, description: line 20 of page 4 to line 23 of page 5, line 25 of page 6 to line 11 of page 7, Fig. 3 | 1, 2, 5, 11, 12, 15 |
| A | The whole document | 3-4, 6-10, 13-14, 16-19 |
| | CN101253751A (NAVINI NETWORKS INC) 27 Aug. 2008 (27.08.2008) | |
| X | Abstract, description: line 8 of page 4 to line 3 of page 8 | 1, 2, 5, 11, 12, 15 |
| A | The whole document | 3-4, 6-10, 13-14, 16-19 |
| A | CN101030957A (UNIV BEIJING POSTS & TELECOM) 05 Sep. 2007 (05.09.2007) The whole document | 1-19 |
| A | CN101072066A (ZTE COMMUNICATION CO.,LTD.) 14 Nov. 2007 (14.11.2007) The whole document | 1-19 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 Apr. 2011(19.04.2011) | **02 Jun. 2011 (02.06.2011)** |

| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>WANG, Chunyan<br><br>Telephone No. (86-10)62411298 |
|---|---|

Form PCT/ISA /210 (second sheet) (July 2009)

<table>
<tr><td colspan="2" align="center"><b>INTERNATIONAL SEARCH REPORT</b><br>Information on patent family members</td><td colspan="2">International application No.<br><br>PCT/CN2011/071362</td></tr>
<tr><td align="center">Patent Documents referred<br>in the Report</td><td align="center">Publication Date</td><td align="center">Patent Family</td><td align="center">Publication Date</td></tr>
<tr><td align="center">CN101359947A</td><td align="center">04.02.2009</td><td align="center">NONE</td><td></td></tr>
<tr><td align="center">CN101253751A</td><td align="center">27.08.2008</td><td align="center">US2007049347A1</td><td align="center">01.03.2007</td></tr>
<tr><td></td><td></td><td align="center">WO2007027268A2</td><td align="center">08.03.2007</td></tr>
<tr><td></td><td></td><td align="center">EP1920577A2</td><td align="center">14.05.2008</td></tr>
<tr><td></td><td></td><td align="center">US7400907B2</td><td align="center">15.07.2008</td></tr>
<tr><td></td><td></td><td align="center">US2008225972A1</td><td align="center">18.09.2008</td></tr>
<tr><td></td><td></td><td align="center">US7822442B2</td><td align="center">26.10.2010</td></tr>
<tr><td align="center">CN101030957A</td><td align="center">05.09.2007</td><td align="center">NONE</td><td></td></tr>
<tr><td align="center">CN101072066A</td><td align="center">14.11.2007</td><td align="center">NONE</td><td></td></tr>
</table>

Form PCT/ISA /210 (patent family annex) (July 2009)

**REFERENCES CITED IN THE DESCRIPTION**

**Patent documents cited in the description**

- CN 201010182028